# EUROPEAN PATENT APPLICATION

(11) **EP 4 340 476 A1**
(43) Date of publication of application: **20.03.2024**
(21) Application number: 22806393.9
(22) Date of filing: 11.04.2022
(51) Int. Cl.: H04W 64/00

(54) **REFERENCE DEVICE DETERMINING METHOD AND APPARATUS, AND NETWORK DEVICE**

(30) Priority: 11.05.2021 CN 202110513336
(71) Applicant: Datang Mobile Communications Equipment Co., Ltd., Beijing 100085 (CN)
(72) Inventor: REN, Bin, Beijing 100085 (CN); DA, Ren, Beijing 100085 (CN); REN, Xiaotao, Beijing 100085 (CN); LI, Hui, Beijing 100085 (CN)
(74) Representative: Maiwald GmbH
(86) International application number: PCT/CN2022/086116
(87) International publication number: WO 2022/237423

(57) **Abstract**

A reference device determination method and a device, and network-side equipment are provided. The reference device determination method includes: obtaining positioning reference parameters of candidate reference devices; determining a target reference device from the candidate reference devices according to the positioning reference parameters; where the positioning reference parameters are obtained through at least one of the following: receiving the positioning reference parameters sent by the candidate reference devices; instructing a first network-side device to send first indication information to the candidate reference devices, where the first indication information instructs the candidate reference devices to send the positioning reference parameters to the LMF; and sending second indication information to the candidate reference devices through a preset signaling message, where the second indication information instructs the candidate reference devices to send the positioning reference parameters to the LMF.

## Description

### CROSS REFERENCE OF RELATED APPLICATION

The present disclosure claims a priority of Chinese patent disclosure No. CN202110513336.8 filed on May 11, 2021, which is incorporated herein by reference in its entirety.

### TECHNICAL FIELD

The present disclosure relates to the field of mobile communication technology, and in particular, to a reference device determination method and a device, and a network-side equipment.

### BACKGROUND

With the rapid development of 5th Generation New Radio (5G NR) in the fifth generation mobile communication technology, intelligent systems such as the Internet of Things have put forward higher requirements for their location services. Therefore, how to improve the positioning accuracy of User Terminal (UE) has become an urgent problem to be solved.

### SUMMARY

Embodiments of the present disclosure provide a reference device determination method and a device, and network-side equipment to improve the positioning accuracy of UE positioning in the 5G NR system.

In a first aspect, a reference device determination method is provided in an embodiment of the present disclosure, applied to a Location Management Function (LMF) network element, including:
obtaining positioning reference parameters of candidate reference devices;
determining a target reference device from the candidate reference devices according to the positioning reference parameters;
where the positioning reference parameters are obtained through at least one of the following:
receiving the positioning reference parameters sent by the candidate reference devices;
instructing a first network-side device to send first indication information to the candidate reference devices, where the first indication information instructs the candidate reference devices to send the positioning reference parameters to the LMF; and
sending second indication information to the candidate reference devices through a preset signaling message, where the second indication information instructs the candidate reference devices to send the positioning reference parameters to the LMF.

Optionally, the positioning reference parameters include at least one of the following:
location parameters of the candidate reference devices and accuracy indication parameters of the location parameters.

Optionally, the location parameters include at least one of the following:
location estimate values, velocity estimate values, device capability parameters, and positioning method parameters of the candidate reference devices.

Optionally, the accuracy indication parameters include at least one of the following:
quality indication parameters of the location estimate values, error range parameters of the location estimate values, uncertainty parameters of the location estimate values, and reliability parameters of the positioning method parameters.

Optionally, when the accuracy indication parameters include the error range parameters of the location estimate values, the error range parameters include a first error range parameter and/or a second error range parameter;
where the first error range parameter includes a first error of a location solution value of the candidate reference devices; the first error includes an error value and/or an error resolution;
the second error range parameter includes a second error of the candidate reference devices, where the second error is an error of the location solution value and/or a positioning measurement value.

Optionally, the determining the target reference device from the candidate reference devices according to the positioning reference parameters includes:
when the candidate reference devices include one reference device, determining whether the candidate reference device is the target reference device according to the positioning reference parameters and preset parameter requirements; where the preset parameter requirements include a requirement for at least one of the positioning reference parameters;
when the candidate reference devices include at least two reference devices, determining the target reference device from the candidate reference devices according to a preset selection method.

Optionally, the determining the target reference device from the candidate reference devices according to the preset selection method includes at least one of the following:
determining the target reference device from the candidate reference devices according to an ascending order of numerical values of the quality indication parameters of the location estimate values;
determining the target reference device from the candidate reference devices according to an ascending order of numerical values of the uncertainty parameters of the location estimate values;
determining the target reference device from the candidate reference devices according to an ascending order of the velocity estimate values;
determining the target reference device from the candidate reference devices according to an ascending order of numerical values of the device capability parameters of the candidate reference devices;
determining the target reference device from the candidate reference devices according to an ascending order of numerical values of the reliability parameters of the positioning method parameters; or
determining the target reference device from the candidate reference devices based on at least two parameters among the positioning reference parameters.

Optionally, subsequent to the determining the target reference device from the candidate reference devices, the method further includes:
sending positioning assistance data to the target reference device or adjacent network-side devices of the target reference device;
receiving positioning measurement values;
positioning a target terminal based on the positioning measurement values.

In a second aspect, a parameter processing method is provided in an embodiment of the present disclosure, applied to a candidate reference device, including:
determining a positioning reference parameter;
sending the positioning reference parameter to a Location Management Function (LMF) network element;
where the positioning reference parameter is sent through at least one of the following:
sent by the candidate reference device autonomously;
sent when receiving first indication information sent by a first network-side device, where the first indication information is sent by the first network-side device which is instructed by the LMF; and
sent when a preset signaling message sent by the LMF is received.

Optionally, the positioning reference parameter includes at least one of the following:
a location parameter of the candidate reference device and an accuracy indication parameter of the location parameter.

Optionally, the location parameter includes at least one of the following:
a location estimate value, a velocity estimate value, a device capability parameter, and a positioning method parameter of the candidate reference device.

Optionally, the accuracy indication parameter includes at least one of the following:
a quality indication parameter of the location estimate value, an error range parameter of the location estimate value, an uncertainty parameter of the location estimate value, and a reliability parameter of the positioning method parameter.

Optionally, when the accuracy indication parameter includes the error range parameter of the location estimate, the error range parameter includes a first error range parameter and/or a second error range parameter;
where the first error range parameter includes a first error of a location solution value of the candidate reference device; the first error includes an error value and/or an error resolution;
the second error range parameter includes a second error of the candidate reference device, where the second error is an error of the location solution value and/or a positioning measurement value.

Optionally, when the location parameter includes the location estimate value, the determining the positioning reference parameter includes:
when the candidate reference device includes a network-side device, obtaining a location estimate value of the network-side device and/or a quality indication parameter of the location estimate value;
when the candidate reference device includes a terminal device, positioning the terminal device to obtain a location estimate value of the terminal device, and obtaining a quality indication parameter of the location estimate value.

Optionally, the positioning the terminal device to obtain the location estimate value of the terminal device includes:
positioning the terminal device according to a preset positioning method to obtain the location estimate value of the terminal device;
the preset positioning method includes at least one of the following:
a laser mapping method, a RAT-independent UE-based positioning, and a RAT-dependent UE-based positioning.

Optionally, the obtaining the quality indication parameter of the location estimate value includes:
determining the quality indication parameter of the location estimate value based on the preset positioning method and/or a location attribute of the terminal device's location estimate value; where the location attribute includes: the location estimate value indicates a preset position and/or a location of the transmission-reception point of a target network-side device.

Optionally, the sending the positioning reference parameter to the LMF network element includes:
when the candidate reference device includes a network-side device, sending the positioning reference parameter to the LMF network element based on a New Radio (NR) positioning protocol A signaling;
when the candidate reference device includes a terminal device, sending the positioning reference parameter to the LMF network element based on a Long Term Evolution (LTE) positioning protocol signaling.

Optionally, subsequent to the sending the positioning reference parameter to the LMF network element, the method includes:
when the candidate reference device is the target reference device, receiving positioning assistance data sent by the LMF;
measuring a positioning measurement value according to the positioning assistance data, and sending the positioning measurement value to the LMF.

In a third aspect, a reference device determination method is further provided in an embodiment of the present disclosure, applied to a network-side device, including:
receiving third indication information sent by a Location Management Function (LMF) network element;
in response to the third indication information, sending first indication information to candidate reference devices, where the first indication information instructs the candidate reference devices to send the positioning reference parameters to the LMF; the positioning reference parameters are used by the LMF to determine a target reference device from the candidate reference devices.

In a fourth aspect, a network-side device is further provided in an embodiment of the present disclosure, including a Location Management Function (LMF) network element and
a memory, a transceiver, a processor:
where the memory is configured to store a computer program; a transceiver is configured to send and receive data under a control of the processor; the processor is configured to read the computer program in the memory and perform:
obtaining positioning reference parameters of candidate reference devices;
determining a target reference device from the candidate reference devices according to the positioning reference parameters;
where the positioning reference parameters are obtained through at least one of the following:
   receiving the positioning reference parameters sent by the candidate reference devices;
   instructing a first network-side device to send first indication information to the candidate reference devices, where the first indication information instructs the candidate reference devices to send the positioning reference parameters to the LMF; and
   sending second indication information to the candidate reference devices through a preset signaling message, where the second indication information instructs the candidate reference devices to send the positioning reference parameters to the LMF.

Optionally, the positioning reference parameters include at least one of the following:
location parameters of the candidate reference devices and accuracy indication parameters of the location parameters.

Optionally, the location parameters include at least one of the following:
location estimate values, velocity estimate values, device capability parameters, and positioning method parameters of the candidate reference devices.

Optionally, the accuracy indication parameters include at least one of the following:
quality indication parameters of the location estimate values, error range parameters of the location estimate values, uncertainty parameters of the location estimate values, and reliability parameters of the positioning method parameters.

Optionally, when the accuracy indication parameters include the error range parameters of the location estimate values, the error range parameters include a first error range parameter and/or a second error range parameter;
where the first error range parameter includes a first error of a location solution value of the candidate reference devices; the first error includes an error value and/or an error resolution;
the second error range parameter includes a second error of the candidate reference devices, where the second error is an error of the location solution value and/or a positioning measurement value.

Optionally, the determining the target reference device from the candidate reference devices according to the positioning reference parameters includes:
when the candidate reference devices include one reference device, determining whether the candidate reference device is the target reference device according to the positioning reference parameters and preset parameter requirements; where the preset parameter requirements include a requirement for at least one of the positioning reference parameters;
when the candidate reference devices include at least two reference devices, determining the target reference device from the candidate reference devices according to a preset selection method.

Optionally, the determining the target reference device from the candidate reference devices according to the preset selection method includes at least one of the following:
determining the target reference device from the candidate reference devices according to an ascending order of numerical values of the quality indication parameters of the location estimate values;
determining the target reference device from the candidate reference devices according to an ascending order of numerical values of the uncertainty parameters of the location estimate values;
determining the target reference device from the candidate reference devices according to an ascending order of the velocity estimate values;
determining the target reference device from the candidate reference devices according to an ascending order of numerical values of the device capability parameters of the candidate reference devices;
determining the target reference device from the candidate reference devices according to an ascending order of numerical values of the reliability parameters of the positioning method parameters; or
determining the target reference device from the candidate reference devices based on at least two parameters among the positioning reference parameters.

Optionally, subsequent to the determining the target reference device from the candidate reference devices, the method further includes:
sending positioning assistance data to the target reference device or adjacent network-side devices of the target reference device;
receiving positioning measurement values;
positioning a target terminal based on the positioning measurement values.

In a fifth aspect, a terminal is further provided in an embodiment of the present disclosure, including:
a memory, a transceiver, a processor:
where the memory is configured to store a computer program; a transceiver is configured to send and receive data under a control of the processor; the processor is configured to read the computer program in the memory and perform:
determining a positioning reference parameter;
sending the positioning reference parameter to a Location Management Function (LMF) network element;
where the positioning reference parameter is sent through at least one of the following:
sent by the candidate reference device autonomously;
sent when receiving first indication information sent by a first network-side device, where the first indication information is sent by the first network-side device which is instructed by the LMF; and
sent when a preset signaling message sent by the LMF is received.

Optionally, the positioning reference parameter includes at least one of the following:
a location parameter of the candidate reference device and an accuracy indication parameter of the location parameter.

Optionally, the location parameter includes at least one of the following:
a location estimate value, a velocity estimate value, a device capability parameter, and a positioning method parameter of the candidate reference device.

Optionally, the accuracy indication parameter includes at least one of the following:
a quality indication parameter of the location estimate value, an error range parameter of the location estimate value, an uncertainty parameter of the location estimate value, and a reliability parameter of the positioning method parameter.

Optionally, when the accuracy indication parameter includes the error range parameter of the location estimate, the error range parameter includes a first error range parameter and/or a second error range parameter;
where the first error range parameter includes a first error of a location solution value of the candidate reference device; the first error includes an error value and/or an error resolution;
the second error range parameter includes a second error of the candidate reference device, where the second error is an error of the location solution value and/or a positioning measurement value.

Optionally, when the location parameter includes the location estimate value, the determining the positioning reference parameter includes:
when the candidate reference device includes a network-side device, obtaining a location estimate value of the network-side device and/or a quality indication parameter of the location estimate value;
when the candidate reference device includes a terminal device, positioning the terminal device to obtain a location estimate value of the terminal device, and obtaining a quality indication parameter of the location estimate value.

Optionally, the positioning the terminal device to obtain the location estimate value of the terminal device includes:
positioning the terminal device according to a preset positioning method to obtain the location estimate value of the terminal device;
the preset positioning method includes at least one of the following:
a laser mapping method, a RAT-independent UE-based positioning, and a RAT-dependent UE-based positioning.

Optionally, the obtaining the quality indication parameter of the location estimate value includes:
determining the quality indication parameter of the location estimate value based on the preset positioning method and/or a location attribute of the terminal device's location estimate value; where the location attribute includes: the location estimate value indicates a preset position and/or a location of the transmission-reception point of a target network-side device.

Optionally, the sending the positioning reference parameter to the LMF network element includes:
when the candidate reference device includes a network-side device, sending the positioning reference parameter to the LMF network element based on a New Radio (NR) positioning protocol A signaling;
when the candidate reference device includes a terminal device, sending the positioning reference parameter to the LMF network element based on a Long Term Evolution (LTE) positioning protocol signaling.

Optionally, subsequent to the sending the positioning reference parameter to the LMF network element, the method includes:
when the candidate reference device is the target reference device, receiving positioning assistance data sent by the LMF;
measuring a positioning measurement value according to the positioning assistance data, and sending the positioning measurement value to the LMF.

In a sixth aspect, a network-side device is further provided in an embodiment of the present disclosure, including:
a memory, a transceiver, a processor:
where the memory is configured to store a computer program; a transceiver is configured to send and receive data under a control of the processor; the processor is configured to read the computer program in the memory and perform:
receiving third indication information sent by a Location Management Function (LMF) network element;
in response to the third indication information, sending first indication information to candidate reference devices, where the first indication information instructs the candidate reference devices to send the positioning reference parameters to the LMF; the positioning reference parameters are used by the LMF to determine a target reference device from the candidate reference devices.

In a seventh aspect, a reference device determination equipment is further provided in an embodiment of the present disclosure, applied to a Location Management Function (LMF) network element and including:
a parameter obtaining module, configured to obtain positioning reference parameters of candidate reference devices;
a device determination module, configured to determine a target reference device from the candidate reference devices according to the positioning reference parameters;
where the positioning reference parameters are obtained through at least one of the following:
   receiving the positioning reference parameters sent by the candidate reference devices;
   instructing a first network-side device to send first indication information to the candidate reference devices, where the first indication information instructs the candidate reference devices to send the positioning reference parameters to the LMF; and
   sending second indication information to the candidate reference devices through a preset signaling message, where the second indication information instructs the candidate reference devices to send the positioning reference parameters to the LMF.

In an eighth aspect, a parameter processing equipment is further provided in an embodiment of the present disclosure, applied to a candidate reference device and including:
a parameter determination module, configured to determine a positioning reference parameter;
a parameter sending module, configured to send the positioning reference parameter to a Location Management Function (LMF) network element;
where the positioning reference parameter is sent through at least one of the following:
   sent by the candidate reference device autonomously;
   sent when receiving first indication information sent by a first network-side device, where the first indication information is sent by the first network-side device which is instructed by the LMF; and
   sent when a preset signaling message sent by the LMF is received.

In a ninth aspect, a reference device determination equipment is further provided in an embodiment of the present disclosure, applied to a network-side device and including:
an information receiving module, is configured to receive third indication information sent by a Location Management Function (LMF) network element;
an information response module, configured to, in response to the third indication information, send first indication information to candidate reference devices, where the first indication information instructs the candidate reference devices to send the positioning reference parameters to the LMF; the positioning reference parameters are used by the LMF to determine a target reference device from the candidate reference devices.

In a tenth aspect, an electric device is further provided in an embodiment of the present disclosure, including a processor, a memory and a computer program stored in the memory and executable by the processor, and the processor executes the computer program to perform the method hereinabove.

In an eleventh aspect, a processor-readable storage medium is further provided in an embodiment of the present disclosure, where a computer program is stored in the processor-readable storage medium, and the computer program is configured to cause the processor to perform the method hereinabove.

According to the embodiment of the present disclosure, the LMF obtains the positioning reference parameters of the candidate reference devices; determines the target reference device among the candidate reference devices according to the positioning reference parameters; the positioning reference parameters can be automatically sent by the candidate reference devices, or obtained through the first indication information and/or second indication information. The embodiments of the present disclosure provide a method of configuring or selecting a target reference device, and configuring or selecting the target reference device through positioning reference parameters, thereby improving the configuration accuracy or selection accuracy of the target reference device, improving the positioning accuracy of UE positioning in the 5GNR system.

### BRIEF DESCRIPTION OF THE DRAWINGS

In order to more clearly illustrate the technical solutions of the embodiments of the present disclosure, the drawings needed to be used in the description of the embodiments of the present disclosure will be briefly introduced below. Obviously, the drawings in the following description are only some embodiments of the present disclosure. , for those of ordinary skill in the art, other drawings can also be obtained based on these drawings without exerting creative labor.
Fig. 1 is flowchart of a reference device determination method in an embodiment of the present disclosure;
Fig. 2 is a first flowchart of a parameter processing method in an embodiment of the present disclosure;
Fig. 3 is a second flowchart of a parameter processing method in an embodiment of the present disclosure;
Fig. 4 is a schematic view of a reference device determination equipment in an embodiment of the present disclosure;
Fig. 5 is a first schematic view of a parameter processing equipment in an embodiment of the present disclosure;
Fig. 6 is a second schematic view of a parameter processing equipment in an embodiment of the present disclosure;
Fig. 7 is a first schematic view of a network-side device in an embodiment of the present disclosure;
Fig. 8 is a schematic view of a terminal in an embodiment of the present disclosure; and
Fig. 9 is a second schematic view of a network-side device in an embodiment of the present disclosure.

### DETAILED DESCRIPTION

In the embodiment of the present disclosure, the term "and/or" describes the association relationship of associated objects, indicating that there can be three relationships, for example, A and/or B, which can mean: A exists alone, A and B exist simultaneously, and B exists alone. The character "/" generally indicates that the related objects are in an "or" relationship.

In the embodiment of this disclosure, the term "plurality" refers to two or more than two, and other quantifiers are similar to it.

The technical solutions in the embodiments of the present disclosure will be clearly and completely described below with reference to the accompanying drawings in the embodiments of the present disclosure. Obviously, the described embodiments are only some of the embodiments of the present disclosure, not all of them. Based on the embodiments in this disclosure, all other embodiments obtained by those of ordinary skill in the art without making creative efforts fall within the scope of protection of this disclosure.

Embodiments of the present disclosure provide a reference device determination method and device, a parameter processing method and device, and a storage medium to improve the positioning accuracy of UE positioning in the 5G NR system.

Among them, the method and the device are based on the same application concept. Since the principles of the method and the device to solve the problem are similar, the implementation of the device and the method can be referred to each other, and the repeated details will not be repeated.

In addition, the technical solutions provided by the embodiments of the present disclosure can be applied to a variety of systems, especially 5G systems. For example, applicable systems may be global system of mobile communication (GSM) system, code division multiple access (CDMA) system, wideband code division multiple access (WCDMA), general packet radio service (GPRS) system, long term evolution (LTE) system, LTE frequency division duplex (FDD) system, LTE time division duplex (TDD) system, Long term evolution advanced (LTE-A) system, universal mobile telecommunication system (UMTS), worldwide interoperability for microwave access (WiMAX) system, 5G New Radio, NR) system, etc. These various systems include terminal equipment and network-side device. The system may also include the core network part, such as the Evolved Packet System (EPS), 5G system (5GS), etc.

The terminal device involved in the embodiments of the present disclosure may be a device that provides voice and/or data connectivity to users, a handheld device with a wireless connection function, or other processing devices connected to a wireless modem, etc. In different systems, the names of terminal equipment may also be different. For example, in a 5G system, the terminal equipment may be called User Equipment (UE). Wireless terminal equipment can communicate with one or more core networks (CN) via a Radio Access Network (RAN). The wireless terminal equipment can be a mobile terminal equipment, such as a mobile phone (also known as a "cellular phone"). " telephone) and computers with mobile terminal devices, which may be, for example, portable, pocket-sized, handheld, computer-built-in or vehicle-mounted mobile devices, which exchange speech and/or data with the radio access network. For example, Personal Communication Service (PCS) phones, cordless phones, Session Initiated Protocol (SIP) phones, Wireless Local Loop (WLL) stations, Personal Digital Assistants (PDA) and other equipment. Wireless terminal equipment may also be called a system, a subscriber unit, a subscriber station, a mobile station, a mobile station, a remote station, or an access point, remote terminal, access terminal, user terminal, user agent, user device, are not limited in the embodiments of the present disclosure.

The network-side device involved in the embodiment of the present disclosure may be a base station, and the base station may include multiple cells that provide services for terminals. Depending on the specific application, a base station can also be called an access point, or it can be a device in the access network that communicates with wireless terminal equipment through one or more sectors on the air interface, or it can be named by another name. The network-side device can be used to exchange received air frames with Internet Protocol (IP) packets and act as a router between the wireless terminal device and the rest of the access network, where the rest of the access network can include Internet Protocol (IP) communications network. The network-side device can also coordinate the attribute management of the air interface. For example, the network-side device involved in the embodiment of the present disclosure may be a network-side device (Base Transceiver Station) in Global System for Mobile communications (GSM) or Code Division Multiple Access (CDMA). , BTS), it can also be the network-side device (NodeB) in the Wide-band Code Division Multiple Access (WCDMA), or it can be the evolution in the long term evolution (LTE) system Network side equipment (evolutional Node B, eNB or e-NodeB), 5G base station (gNB) in the 5G network architecture (next generation system), or home evolved base station (Home evolved Node B, HeNB), relay node (relay node), home base station (femto), pico base station (pico), etc., are not limited in the embodiments of the present disclosure. In some network structures, network-side devices may include centralized unit (CU) nodes and distributed unit (DU) nodes. The centralized unit and distributed unit may also be arranged geographically separately.

In the mobile communication system, it is necessary to perform uplink and downlink positioning of the user terminal (UE), including the Uplink Time Difference Of Arrival (DL TDOA), the Downlink Time Difference Of Arrival (UL TDOA), Positioning methods such as Multi-cell-Round Trip Time (Multi-RTT), Uplink Angle Of Arrival (UL-AOA), and Downlink Angle Of Departure (DL-AOD) Way. In the 5G NR system, with the rapid development of intelligent systems such as the Internet of Things, the 5G NR system needs to provide higher-precision positioning function services.

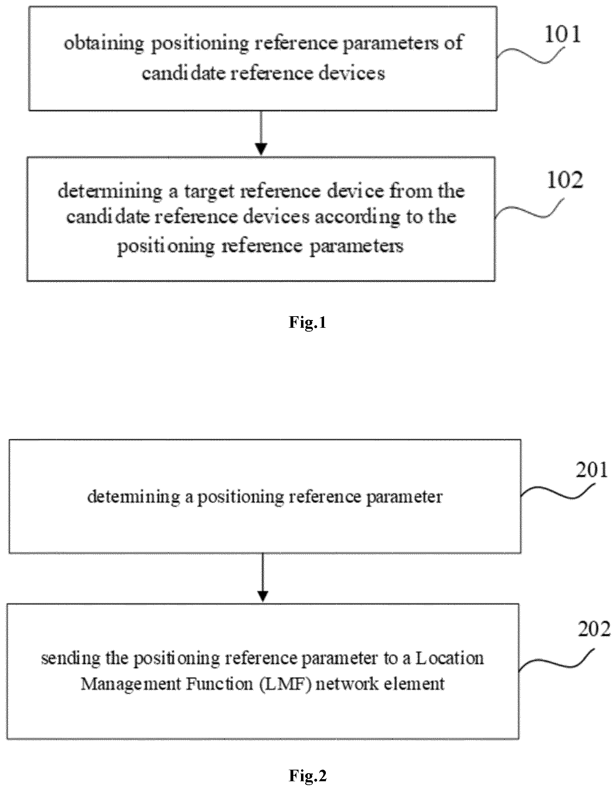

As shown in Fig. 1, an embodiment of the present disclosure provides a flow chart of a method for determining a reference device. The method is applied to a location management function network element (Location Management Function, LMF). The method includes:
Step 101: obtaining positioning reference parameters of candidate reference devices.

Among them, the reference device is used to perform positioning reference for the target UE; optionally, for the UE's serving base station (or other network-side devices that provide network services for the UE, such as other access network devices), one or more A reference device is used to provide positioning reference function when positioning the UE of the base station. When there are candidate reference devices corresponding to the base station, the LMF selects the target reference device among the candidate reference devices according to the positioning reference parameters of the candidate reference devices as the reference device of the base station.

Optionally, the candidate reference device and/or the reference device may be a network-side device or a user-side device. The network-side device is such as a base station or other devices in the network, and the user-side device is such as a user terminal such as a mobile phone. The candidate reference device and/or reference device may be a device that is preconfigured as a reference device, or may be a device that is not preconfigured but can be a candidate reference device and/or reference device.

Specifically, the positioning reference parameter may include a location parameter of the candidate reference device and/or an accuracy indication parameter indicating the location parameter, and the like. Location parameters such as location measurement data and/or location estimate values. In the LPP protocol (TS 37.355) of NR Rel-16, the signaling for the server to request location measurement data and/or location estimate values from the target UE side is defined. This signaling can be used to allow the UE to report the relevant positioning reference parameters it obtains to the LMF.

Step 102: determining a target reference device from the candidate reference devices according to the positioning reference parameters
where the positioning reference parameters are obtained through at least one of the following methods one to three:
Method 1: receiving the positioning reference parameters sent by the candidate reference devices.
   Candidate reference device can automatically report positioning reference parameters to the LMF.
Method 2: instructing a first network-side device to send first indication information to the candidate reference devices, where the first indication information instructs the candidate reference devices to send the positioning reference parameters to the LMF.
   For example, the first network-side device includes a base station, and the LMF sends indication signaling to the base station, which is triggered by the base station through broadcast signaling or radio resource control layer (Radio Resource Control, RRC) dedicated signaling. The broadcast signaling can be through a system message (System message). Information Block (SIB) is sent. After receiving the indication signaling sent by the LMF, the base station sends a broadcast message or RRC signaling to all UEs in its coverage area, requesting all candidate reference devices (or reference devices) to send their positioning reference parameters to the LMF. Among them, a group of UEs may be pre-configured as candidate reference devices.
Method 3: sending second indication information to the candidate reference devices through a preset signaling message, where the second indication information instructs the candidate reference devices to send the positioning reference parameters to the LMF.

The LMF may send a preset signaling message as a dedicated message to one or more candidate reference devices. The preset signaling message is used to instruct the UE to send the positioning reference parameters to the LMF; for example: the LMF triggers the association of the LMF. All UEs within the coverage area of the base station first perform UE-based positioning (UE-based positioning, such as UL-based DL-TDOA or UE-based DL-AOD), allowing all candidate UEs to report the positioning reference parameters of the UE. Optionally, the preset signaling message may be an LTE Positioning Protocol (LPP) signaling message.

After receiving the positioning reference parameters of the candidate reference device, the LMF selects the optimal target reference device based on the positioning reference parameters, and/or determines whether the positioning reference parameters meet the requirements as a target reference device based on preset judgment rules. It can be understood that in this embodiment of the present disclosure, for a serving base station, there may be one or at least two target reference devices.

After determining the target reference device, when positioning other user equipment, the known position information of the target reference device can be used as reference information, for example, to estimate and/or correct the transmission and reception errors of the positioning signal. The positioning signal can be a positioning signal of a base station and/or Transmission-Reception Point (TRP), to improve positioning accuracy.

In the embodiment of the present disclosure, the LMF obtains the positioning reference parameters of the candidate reference devices; determines the target reference device among the candidate reference devices according to the positioning reference parameters; the positioning reference parameters can be automatically sent by the candidate reference devices, or through the first instruction information and/or second instruction information acquisition; the embodiment of the present disclosure provides a method of configuring or selecting a reference device, and configuring or selecting the reference device through positioning reference parameters, improving the configuration accuracy or selection accuracy of the target reference device, and thereby improving the configuration accuracy or selection accuracy of the target reference device. Improve the positioning accuracy of UE positioning in the 5G NR system.

Moreover, in the subsequent positioning process, the position information of the target reference device can be referred to, which can further improve the positioning accuracy of positioning the UE.

Optionally, in this embodiment of the present disclosure, the positioning reference parameters include at least one of the following:
the candidate reference device and the accuracy indication parameter of the location parameter.

The location parameter is used to indicate the location information of the candidate reference device, such as the location estimate value and the location solution value; optionally, the location parameter includes at least one of the following:

The location estimate, velocity estimate, device capability parameter, and positioning method parameter of the candidate reference device; where the device capability parameter is used to represent the comprehensive capability of the candidate reference device or the capability as a reference device, such as UE network capabilities and UE wireless capabilities . Access capability, in the process of transmitting device capability parameters, 1-bit signaling can be used to transmit device capability parameters. The positioning method parameter is used to indicate the positioning method of the device, for example: different UE-based positioning methods, including: UL-based DL-TDOA, UE-based DL-AOD.

Optionally, in this embodiment of the present disclosure, the accuracy indication parameter includes at least one of the following:
location estimate values, velocity estimate values, device capability parameters, and positioning method parameters of the candidate reference devices.

Among them, the quality indication parameter indicates the position corresponding to the location estimate value, which is the quality of the position of the target reference device; the error range parameter indicates the error range between the location estimate value and the true position value; and the uncertainty parameter of the location estimate value indicates the degree of uncertainty of the position corresponding to the location estimate; the reliability parameter of the positioning method parameter indicates the degree of reliability of the positioning method corresponding to the positioning method parameter.

Optionally, for different location parameters, the accuracy indication parameters can be preset; for example, the specific value of the accuracy indication parameter corresponding to each location parameter is preset.

In an optional embodiment, if the accuracy indication parameter includes an error range parameter of the location estimate, the error range parameter includes a first error range parameter and/or a second error range parameter;
the first error range parameter includes the first error of the location solution value of the candidate reference device; the first error includes an error value and/or an error resolution.

The error value indicates the optimal estimate of the uncertainty corresponding to the location solution value; the error resolution indicates the quantization step of the error value.

The second error range parameter includes a second error of the candidate reference device, where the second error is an error of the location solution value and/or the positioning measurement value.

It can be understood that in the embodiment of the present disclosure, "measurement value" means "measured quantity", that is, the result of measurement, that is, "positioning measurement value" refers to "positioning measurement value"; the second error is the position Error of the solution value and/or positioning measurement value , for example: error value based on 1 sigma or 3 sigma criterion (where sigma represents the standard deviation of the measurement value); variance value; at [X%] confidence level, the probability that the error of the location solution value and/or positioning measurement value is located in a certain error interval, etc., where the value range of X is from 0 to 100, and the candidate values are 80, 90, 95, etc.

In an optional embodiment, determining the target reference device among the candidate reference devices according to the positioning reference parameter includes case one and case two:
Case 1: If the candidate reference device includes one reference device, determining whether the candidate reference device is a target reference device according to the positioning reference parameters and preset parameter requirements; where the preset parameter requirements include a requirement for at least one of the positioning reference parameters.

For example, parameter requirements are preset, and the preset parameter requirements include requirements for at least one of the positioning reference parameters; after obtaining the positioning reference parameters, it is judged based on the preset parameter requirements whether the candidate reference device meets the requirements as a target reference device; If satisfied, the candidate reference device can be used as the target reference device; if not satisfied, subsequent polling and judgment will continue.

In case two, if the candidate reference devices include at least two reference devices, the target reference device among the candidate reference devices is determined according to a preset selection method. The preset selection method may include selection based on one of the positioning reference parameters, or may include selection based on multiple positioning reference parameters, for example, using a weighted summation method.

In an optional embodiment, the above situation 2 includes at least one of the following situations 3 to 8:

Case 3: selecting the target reference device from the candidate reference devices according to an ascending order of numerical values of the quality indication parameters of the location estimate values.

Based on the quality indication parameter of the location estimate value of the candidate reference device, in order from high to low, the one with a higher quality location estimate is given priority as the target reference device to ensure that the target reference device has a higher position quality.

Case 4: selecting the target reference device from the candidate reference devices according to an ascending order of numerical values of the uncertainty parameters of the location estimate values.

Based on the numerical values of the uncertainty parameters of the location estimate values of the candidate reference devices in order from small to large, the one with smaller uncertainty in the location estimate is given priority as the target reference device to improve the determination degree of the location estimate of the target reference device.

Case 5: selecting the target reference device from the candidate reference devices according to an ascending order of the velocity estimate values.

Based on the numerical values of the uncertainty parameters of the location estimate values of the candidate reference devices in ascending order, the one with smaller uncertainty in the location estimate is given priority as the target reference device.

Case 6: selecting the target reference device from the candidate reference devices according to an ascending order of numerical values of the device capability parameters of the candidate reference devices.

Priority is given to selecting candidate reference devices with strong device capabilities as target reference devices.

Case 7: selecting the target reference device from the candidate reference devices according to an ascending order of numerical values of the reliability parameters of the positioning method parameters.

Based on the numerical value order of reliability parameters of the positioning method parameters from small to large, the one with higher reliability parameters is preferably selected as the target reference device.

Case 8: selecting the target reference device from the candidate reference devices based on at least two parameters among the positioning reference parameters.

The uncertainty parameter of the location estimate and the velocity estimate in the positioning reference parameters are selected, then the two are weighted and summed according to the preset weight to obtain the comprehensive weight, and the candidate reference device with a higher comprehensive weight is selected as a target reference device to achieve multi-dimensional selection of target reference devices.

In an optional embodiment, after determining the target reference device among the candidate reference devices, the method further includes:
sending positioning assistance data to the target reference device or adjacent network-side devices of the target reference device;
receiving positioning measurement values;
positioning a target terminal based on the positioning measurement values.

For example, for downlink positioning or joint uplink and downlink positioning, the LMF sends the downlink positioning assistance data obtained from the serving base station (the serving base station of the positioned device) and the neighboring base station of the serving base station to the target reference device or the neighboring base station. For uplink positioning or joint uplink and downlink positioning, the LMF notifies the UE's neighboring base stations of the uplink positioning assistance data obtained from the serving base station.

For downlink positioning or joint uplink and downlink positioning, the LMF receives the downlink positioning measurement values reported by the target reference device and non-target reference device. The positioning measurement values include the Reference Signal Time Difference (RSTD) or the UE sending and receiving time difference, etc.; for uplink positioning Or uplink and downlink joint positioning, the LMF receives the uplink positioning measurement values reported by the serving base station and neighboring base stations. The positioning measurement values include the link relative arrival time (Row link arrival time, RTOA) or the base station sending and receiving time difference.

Finally, based on the positioning measurement values and the pre-obtained position of the target reference device, base station and/or TRP position, the position is calculated and the target terminal is positioned.

In the embodiment of the present disclosure, the LMF obtains the positioning reference parameters of the candidate reference devices; determines the target reference device among the candidate reference devices according to the positioning reference parameters; the positioning reference parameters can be automatically sent by the candidate reference devices, or through the first instruction information and/or second instruction information acquisition; the embodiment of the present disclosure provides a method of configuring or selecting a reference device, and configuring or selecting the reference device through positioning reference parameters, improving the configuration accuracy or selection accuracy of the target reference device, and thereby improving the configuration accuracy or selection accuracy of the target reference device, improving the positioning accuracy of UE positioning in the 5G NR system. Moreover, in the subsequent positioning process, the position information of the target reference device can be referred to, which can further improve the positioning accuracy of positioning the UE.

Referring to Fig. 2, an embodiment of the present disclosure also provides a parameter processing method, which is applied to a candidate reference device. Optionally, the candidate reference device and/or the reference device may be a network-side device or a user-side device. The network-side device may be a base station, for example. Or other devices in the network, user-side devices such as mobile phones and other user terminals. The candidate reference device and/or reference device may be a device that is preconfigured as a reference device, or may be a device that is not preconfigured but has the capability of being a candidate reference device and/or reference device.

The methods include:
Step 201: determining a positioning reference parameter.

Among them, the reference device is used to perform positioning reference for the target UE; optionally, for the UE's serving base station (or other network-side devices that provide network services for the UE, such as other access network devices), one or more reference devices are used to provide positioning reference function when positioning the UE of the base station. When there are candidate reference devices corresponding to the base station, the LMF selects the target reference device among the candidate reference devices according to the positioning reference parameters of the candidate reference devices as the reference device of the base station.

The positioning reference parameter may include a location parameter of the candidate reference device and/or an accuracy indication parameter indicating the location parameter, and the like. Location parameters such as location measurement data and/or location estimate values. In the LPP protocol (TS 37.355) of NR Rel-16, the signaling for the server to request location measurement data and/or location estimate values from the target UE side is defined. This signaling is used to allow the UE to report the relevant positioning reference parameters it obtains to the LMF.

Step 202: sending the positioning reference parameter to a Location Management Function (LMF) network element;
where the positioning reference parameters are sent through at least one of the following methods four to six:
Method 4: sent by the candidate reference device autonomously.

Candidate reference device can automatically report positioning reference parameters to the LMF.

Method 5: sent when receiving first indication information sent by a first network-side device, where the first indication information is sent by the first network-side device which is instructed by the LMF.

For example, the first network-side device includes a base station, and the LMF sends indication signaling to the base station, which is triggered by the base station through broadcast signaling or RRC dedicated signaling. The broadcast signaling can be sent through system messages. After receiving the indication signaling sent by the LMF, the base station sends the first indication information to all UEs in its coverage area, requesting all candidate reference devices (or reference devices) to send their positioning reference parameters to the LMF. When the candidate reference device receives the first indication information, it sends positioning reference parameters to the LMF.

Method 6: sent when a preset signaling message sent by the LMF is received.

a preset signaling message as a dedicated message to one or more candidate reference devices . The preset signaling message is used to instruct the UE to send the positioning reference parameters to the LMF; for example: the LMF triggers the association of the LMF. All UEs within the coverage area of the base station first perform UE-based positioning (UE-based positioning, such as UL-based DL-TDOA or UE-based DL-AOD), allowing all candidate UEs to report the positioning reference parameters of the UE; optionally, the preset signaling message may be an LPP signaling message. When the candidate reference device receives the LPP signaling message, it sends the positioning reference parameters to the LMF.

After the candidate reference device sends positioning reference parameters to the LMF, the LMF selects the optimal target reference device based on the positioning reference parameters, and/or determines whether the positioning reference parameters meet the requirements as a target reference device based on preset judgment rules. It can be understood that in this embodiment of the present disclosure, for a serving base station, the target reference device may include one or at least two.

After determining the target reference device, when positioning other user equipment, the known position information of the target reference device can be used as reference information, for example, to estimate and /or correct the transmission and reception errors of the positioning signal. The positioning signal can be a base station. and/or positioning signals from Transmission-Reception Point (TRP) to improve positioning accuracy.

In the embodiment of the present disclosure, the candidate reference device determines the positioning reference parameters; sends the positioning reference parameters to the Location Management Function (LMF) network element; the positioning reference parameters can be automatically sent by the candidate reference device, or through the first indication information and/or the second indication. Information acquisition. The embodiment of the present disclosure provides a way to configure or select a reference device, and the LMF improves the configuration accuracy or selection accuracy of the target reference device by configuring or selecting the reference device through positioning reference parameters, thereby improving the positioning accuracy for positioning the UE in the 5G NR system.

Optionally, in this embodiment of the present disclosure, the positioning reference parameters include at least one of the following:
the location parameter of the candidate reference device and the accuracy indication parameter of the location parameter.

The location parameter is used to indicate the location information of the candidate reference device, such as the location estimate value and the location solution value; optionally, the location parameter includes at least one of the following:

The location estimate, velocity estimate, device capability parameter, and positioning method parameter of the candidate reference device; where the device capability parameter is used to represent the comprehensive capability of the candidate reference device or the capability as a reference device, such as UE network capabilities and UE wireless access capability, in the process of transmitting device capability parameters, 1-bit signaling can be used to transmit device capability parameters. The positioning method parameter is used to indicate the positioning method of the device, for example: different UE-based positioning methods, including: UL-based DL-TDOA, UE-based DL-AOD.

Optionally, in this embodiment of the present disclosure, the accuracy indication parameter includes at least one of the following:
a quality indication parameter of the location estimate value, an error range parameter of the location estimate value, an uncertainty parameter of the location estimate value, and a reliability parameter of the positioning method parameter.

Among them, the quality indication parameter indicates the position corresponding to the location estimate value, which is the quality of the position of the target reference device; the error range parameter indicates the error range between the location estimate value and the true position value; and the uncertainty parameter of the location estimate value indicates the degree of uncertainty of the position corresponding to the location estimate; the reliability parameter of the positioning method parameter indicates the degree of reliability of the positioning method corresponding to the positioning method parameter.

Optionally, for different location parameters, the accuracy indication parameters can be preset; for example, the specific value of the accuracy indication parameter corresponding to each location parameter is preset.

In an optional embodiment, if the accuracy indication parameter includes an error range parameter of the location estimate, the error range parameter includes a first error range parameter and/or a second error range parameter;
the first error range parameter includes the first error of the location solution value of the candidate reference device; the first error includes an error value and/or an error resolution.

The error value indicates the optimal estimate of the uncertainty corresponding to the location solution value; the error resolution indicates the quantization step of the error value.

The second error range parameter includes a second error of the candidate reference device, where the second error is an error of the location solution value and /or the positioning measurement value.

It can be understood that in the embodiment of the present disclosure, "measurement value" means "measured quantity", that is, the result of measurement, that is, "positioning measurement value" refers to "positioning measurement value"; the second error is the error of the location solution value and/or positioning measurement value, for example: error value based on 1 sigma or 3 sigma criterion (where sigma represents the standard deviation of the measurement value); variance value; at [X%] confidence level, the probability that the error of the solution value and/or positioning measurement value is located in a certain error interval, etc., where the value range of X is from 0 to 100, and the candidate values are 80, 90, 95, etc.

In an optional embodiment, if the location parameter includes the location estimate, then the determining the positioning reference parameter includes:

If the candidate reference device includes a network-side device, obtaining the location estimate value of the network-side device and/or the quality indication parameter of the location estimate value.

If the candidate reference device includes a terminal device, the terminal device is positioned to obtain a location estimate value of the terminal device, and a quality indication parameter of the location estimate value is obtained.

If the candidate reference device includes a network-side device, for example, when the reference device is a base station whose location is known in advance, it is sufficient to directly obtain the location estimate of the base station and/or the quality indication parameter of the location estimate.

If the candidate reference device includes a terminal device, for example, when the reference device is a UE, the terminal device is positioned to obtain a location estimate value of the terminal device, and obtain a quality indication parameter of the location estimate; optionally, the positioning the terminal device to obtain the location estimate value of the terminal device includes:

positioning the terminal device according to a preset positioning method to obtain a location estimate value of the terminal device;

The preset positioning method includes at least one of the following:
a laser mapping method, a RAT-independent UE-based positioning, and a RAT-dependent UE-based positioning.

RAT-independent UE-based positioning such as Global Navigation Satellite System (GNSS) positioning, Bluetooth positioning, WiFi positioning and Ultra Wide Band (UWB) positioning; RAT-based positioning such as downlink arrival time difference positioning Or go down and leave the angle positioning.

In an optional embodiment, the obtaining the quality indication parameter of the location estimate value includes:
determining the quality indication parameter of the location estimate value based on the preset positioning method and/or a location attribute of the terminal device's location estimate value; where the location attribute includes: the location estimate value indicates a preset position and/or a location of the transmission-reception point of a target network-side device.

For the quality indication parameters of the location estimate, quality indication parameters corresponding to different preset positioning methods and/or location attributes are preset.

Taking the location attribute as an example, if the location attribute is a preset location, for example, a terminal pre-placed at a known location has a higher corresponding quality indication parameter; or the location estimate is a preset transceiver point location, and its corresponding quality indication parameter higher. For preset positioning methods, since different positioning methods have different positioning accuracy, different positioning methods correspond to different quality indication parameters. For example, GNSS positioning method is higher than Bluetooth, WiFi, UWB and other positioning methods.

As an example, quality indication parameters are preset. The level corresponding to a terminal pre-placed at a known location and the location estimate value is the preset sending and receiving point position is the first level (the highest); the GNSS positioning method corresponds to the second level. Positioning methods such as downlink arrival time difference and downlink arrival time correspond to the third level; positioning methods such as Bluetooth, WiFi, and UWB correspond to the fourth level.

In an optional embodiment, sending the positioning reference parameters to the Location Management Function (LMF) network element includes:
If the candidate reference device includes a network-side device, sending the positioning reference parameter to the Location Management Function (LMF) network element based on the New Radio (NR) positioning protocol A signaling (NR PPa signaling ) ;
If the candidate reference device includes a terminal device, sending the positioning reference parameter to the LMF network element based on a Long Term Evolution (LTE) positioning protocol signaling (LPP signaling) .

In an optional embodiment, after sending the positioning reference parameter to the Location Management Function (LMF) network element, the method includes:
If the candidate reference device is the target reference device, receiving the positioning assistance data sent by the LMF;
measuring the positioning measurement value according to the positioning assistance data, and send the positioning measurement value to the LMF.

For example, for downlink positioning, LMF sends the downlink positioning assistance data obtained from the serving base station (the serving base station of the positioned device) and the adjacent base station of the serving base station to the target reference device, and the target reference device receives the positioning assistance data; positioning assistance Data such as RSTD or UE sending and receiving time difference, etc.

After receiving the positioning assistance data, the target reference device measures the positioning measurement value according to the positioning assistance data and sends the positioning measurement value to the LMF; the positioning measurement value is such as RTOA or the base station transmission and reception time difference; finally, the LMF is based on the positioning measurement value , as well as the position of the target reference device, base station and/or TRP position that has been obtained in advance, perform position calculation, and locate the target terminal.

In the embodiment of the present disclosure, the candidate reference device determines the positioning reference parameters; sends the positioning reference parameters to the Location Management Function (LMF) network element; the positioning reference parameters can be automatically sent by the candidate reference device, or through the first indication information and/or the second indication. Information acquisition; The embodiment of the present disclosure provides a way to configure or select a reference device, and the LMF improves the configuration accuracy or selection accuracy of the target reference device by configuring or selecting the reference device through positioning reference parameters, thereby improving the positioning accuracy for positioning the UE in the 5G NR system.

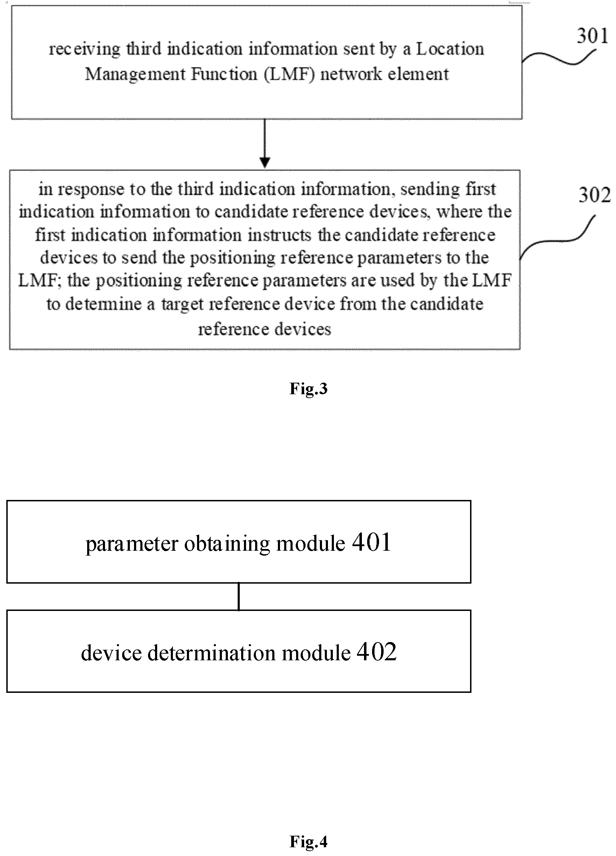

Referring to Fig. 3, an embodiment of the present disclosure also provides a method for determining a reference device, which is applied to a network-side device. The network-side device may be a base station, such as a serving base station of a non-reference device.

### The methods include:

Step 301: receiving third indication information sent by a Location Management Function (LMF) network element.

The third indication information is sent by the LMF as indication signaling, for example, through broadcast signaling or RRC dedicated signaling. The broadcast signaling can be sent through a SIB message.

Step 302: in response to the third indication information, sending first indication information to candidate reference devices, where the first indication information instructs the candidate reference devices to send the positioning reference parameters to the LMF; the positioning reference parameters are used by the LMF to determine a target reference device from the candidate reference devices.

After receiving the third indication information command sent by the LMF, the base station sends the first indication information to all candidate reference devices within its coverage area. The first indication information can be sent through a broadcast message or RRC signaling to request all candidate reference devices (or reference device) sends its positioning reference parameters to LMF. After LMF receives the positioning reference parameters of the candidate reference device, it selects the optimal target reference device according to the positioning reference parameters, and/or determines whether the positioning reference parameters meet the requirements as a target reference device according to the preset judgment rules.

After the LMF determines the target reference device, the known position information of the target reference device can be used as reference information when positioning other user equipment, for example, to estimate and/or correct the transmission and reception errors of the positioning signal. The positioning signal can be Positioning signals from base stations and/or transceiver points TRP to improve positioning accuracy.

In the embodiment of the present disclosure, the network-side device receives the third indication information sent by the Location Management Function (LMF) network element, and in response to the third indication information, sends the first indication information to the candidate reference device, and the first indication information indicates that the candidate reference device sends the positioning reference parameter to the LMF, so that the LMF determines the target reference device among the candidate reference devices according to the positioning reference parameter; an embodiment of the present disclosure provides a configuration or selection reference device method, and by configuring positioning reference parameters or selecting reference device, the configuration accuracy or selection accuracy of the target reference device is improved, thereby improving the positioning accuracy of UE positioning in the 5GNR system.

As a first example, taking the candidate reference device as the user UE and the network-side device (the first network-side device) as the base station, and performing downlink positioning of the target UE as an example, the LMF, the user UE, and the base station respectively perform the following processes:
1. LMF performs the following steps 111 to 115:
   Step 111: LMF triggers or configures the reference device through at least one of the following methods 1 to 3.

Method 1: LMF receives automatic reporting of candidate reference devices.

The reported content includes: the candidate reference device capability parameters (used to determine whether the candidate reference device has the capability to serve as a reference device), the location estimate and the velocity estimate, and the accuracy indication parameters of the location estimate and the velocity estimate (the accuracy indication parameters include Reliability level, error margin and quality indication, etc.). The above reported amount is used by LMF to select a reference device based on certain criteria when there are multiple candidate reference devices.

Method 2: LMF sends indication signaling to the base station, which is triggered by the base station through broadcast signaling (SIB message) or RRC dedicated signaling. The serving gNB sends the first indication information to all UEs in the coverage area, requests all (or pre-configured) candidate reference devices (including UEs with the capability of serving as reference devices), and receives the DL according to the requirements and configuration of the first indication information. PRS and sends the measured values obtained by the measurement together with their position information to the LMF. Broadcast messages or RRC signaling may also request the pre-configured reference device to send UL SRS-POS. SRS is the Sounding Reference Signal (SRS), and SRS-POS represents the SRS signal used for positioning. Among them, a group of devices can be pre-configured as reference devices.

Method 3: LMF is triggered through a dedicated preset signaling message.

The LMF can send a dedicated message (or extend the existing LPP signaling message: provide a UE capability request message, provide a positioning assistance data message, or define a new LPP signaling message) to one or more candidate reference devices. The preset signaling message is used to indicate whether a certain device is selected as a reference device, and to request the reference device to report along with its position coordinate information and positioning measurement values. For example, the LMF triggers all UEs capable of serving as reference devices within the coverage area of the base station associated with the LMF to first perform a UE-based positioning, allowing all candidate UEs to report the UE's location estimate, velocity estimate, and uncertainty.

Step 112: When there are multiple candidate reference devices, LMF selects one or more reference devices based on any one or a combination of the following criteria.
Criterion 1: Selection based on the quality indication of the location estimate reported by the UE from high to low (or uncertainty from small to large);
Guideline 2: Based on the velocity estimate reported by the UE, the UE is selected in ascending order, and the UE whose UE speed is 0 (that is, the UE is stationary) is given priority;
Guideline 3: Based on the UE capability level reported by the UE in order from high to low, the UE with the strongest UE capability is given priority as the reference device;
Guideline 4: Select the accuracy reliability levels corresponding to different UE-based positioning methods reported by the UE in order from high to low.

Step 113: The LMF notifies the candidate reference device of the downlink positioning assistance data obtained from the serving base station and neighboring base stations.

Among them, the message sent by the LMF to the reference device may include configuration information for measurement reporting, including: the content of the positioning measurement value (downlink RSTD and UE transmission and reception time difference, etc.), reporting timing and reporting method (periodic or non-periodic reporting).

Step 114: The LMF receives the positioning measurement quantities reported by the reference device and the non-reference device (RST, UE sending and receiving time difference, etc.).

Step 115: LMF performs position calculation based on the downlink positioning measurement values obtained in step 114 (RSTD and UE transmission and reception time difference, etc.), as well as the position of the reference device and base station/TRP position obtained in advance.

For example, high-precision target UE location information can be obtained based on real-time double differential or one-time single differential processing.

2. The candidate reference device (user UE) performs the following steps 121 to 124:
Step 121: The candidate reference device calculates a location estimate based on different positioning solutions, and an accuracy indication parameter corresponding to the location estimate.

Among them, positioning solutions include pre-known or calibrated, laser mapping acquisition, RAT-independent positioning solutions (GNSS positioning, Bluetooth, WiFi, UWB, etc.), and UE-based DL-TDOA+ UE-based DL-AOD positioning defined by 5GNR.

The location estimate can be in the form of location coordinates. The location coordinates include the following two options, which can be based on the location coordinates defined by the current 37.355 protocol:
Option 1: (x, y, z) in the GCS coordinate system, where Option 1 uses the Cartesian coordinate system;
Option 2: In the GCS coordinate system (northern and southern hemisphere indications, dimensions, accuracy), option 2 adopts the spherical coordinate system.

The accuracy indication parameter of the position coordinates can be the reliability level (reliability parameter), or the error range and quality indication of the reference device position. As an example, the adoption option 1 of the candidate reference device.

Specifically, different accuracy reliability levels (in order from high to low) can be defined, corresponding to different positioning methods:
Option 1-1: Pre-placed at a known location (e.g. obtained through laser mapping);
Option 1-2: RAT-independent positioning scheme obtains the position of the reference device, including: GNSS, Bluetooth, WiFi, and UWB;
Option 1-3: obtain the preliminary reference device position based on the existing UE-based DL-TDOA+ UE-based DL-AOD positioning method;
Options 1-4: The reference device is placed at the location of the current base station TRP.

For example, options 1-1 and 1-4 are the first level; GNSS positioning in option 1-2 is the second level; options 1-3 are the third level; Bluetooth, WiFi, UWB, etc. in options 1-2 as the fourth level).

Step 122: The candidate reference device simultaneously reports the location parameter and the accuracy indication parameter corresponding to the location parameter to the LMF.

Step 123: The candidate reference device receives the downlink positioning assistance data notified by the LMF.

Step 124: Based on the configuration information of the downlink PRS included in the downlink positioning assistance data in step 123, receive and measure the downlink PRS, obtain the downlink positioning measurement amount and report it to the LMF.

3. The base station of the non-reference device performs the following steps 131 to 132:
Step 131: Allocate the resource configuration parameters of the downlink positioning reference signal PRS as positioning assistance data based on the target UE and the candidate reference device, and report the positioning assistance data information to the LMF;
Step 132: Send downlink PRS to all UEs in the serving cell.

As a second example, taking the candidate reference device as the user UE and the network-side device (the first network-side device) as the base station , and performing uplink positioning of the target UE as an example, the LMF, the user UE, and the base station respectively perform the following processes:

### 1. LMF performs the following steps 211 to 215:

Step 211: LMF triggers or configures the reference device through at least one of the following methods 1 to 3.

Method 1: LMF receives automatic reporting of candidate reference devices.

The reported content includes: the candidate reference device capability parameters (used to determine whether the candidate reference device has the capability to serve as a reference device), the location estimate and the velocity estimate, and the accuracy indication parameters of the location estimate and the velocity estimate (the accuracy indication parameters include Reliability level, error margin and quality indication, etc.). The above reported amount is used by LMF to select a reference device based on certain criteria when there are multiple candidate reference devices.

Method 2: LMF sends indication signaling to the base station, which is triggered by the base station through broadcast signaling (SIB message) or RRC dedicated signaling. The serving gNB sends the first indication information to all UEs in the coverage area, requests all (or pre-configured) candidate reference devices (including UEs with the capability of serving as reference devices), and receives the DL according to the requirements and configuration of the first indication information. PRS and sends the measured values obtained by the measurement together with their position information to the LMF. It is also possible that a broadcast message or RRC signaling requests a pre-configured reference device to send UL SRS-POS. Among them, a group of devices can be pre-configured as reference devices.

Mode 3, LMF is triggered through a dedicated DE preset signaling message.

The LMF can send a dedicated message (or extend the existing LPP signaling message: provide a UE capability request message, provide a positioning assistance data message, or define a new LPP signaling message) to one or more candidate reference devices. The default message The command message is used to indicate whether a certain device is selected as a reference device, and to request the reference device to report along with its position coordinate information and positioning measurement values. For example, the LMF triggers all UEs capable of serving as reference devices within the coverage area of the base station associated with the LMF to first perform a UE-based positioning, allowing all candidate UEs to report the UE's location estimate, velocity estimate, and uncertainty.

Step 212: When there are multiple candidate reference devices, the LMF selects one or more reference devices based on any one or a combination of the following criteria.
Criterion 1: Selection based on the quality indication of the location estimate reported by the UE from high to low (or uncertainty from small to large);
Criterion 2: Based on the velocity estimate reported by the UE, the UE is selected in ascending order, and the UE whose UE speed is 0 (that is, the UE is stationary) is given priority;
Criterion 3: Based on the UE capability level reported by the UE in order from high to low, the UE with the strongest UE capability is given priority as the reference device;
Criterion 4: Select the accuracy reliability levels corresponding to different UE-based positioning methods reported by the UE in order from high to low.

Step 213: The LMF notifies the neighboring base stations of the target UE of the uplink positioning assistance data obtained from the serving base station and neighboring base stations.

Step 214: The LMF receives positioning measurement quantities (for example, RTOA or AOA) reported by the serving base station and neighboring base stations.

Step 215: LMF performs position calculation based on the uplink positioning measurement (for example, RTOA, or AOA) obtained in step 214, as well as the position of the reference device and the base station/TRP position obtained in advance.

For example, high-precision target UE location information is obtained based on real-time double differential or one-time single differential processing.

### 2. The candidate reference device (user UE) performs the following steps 221 to 224:

Step 221: The candidate reference device calculates a location estimate based on different positioning solutions, and an accuracy indication parameter corresponding to the location estimate.

Among them, positioning solutions include pre-known or calibrated, laser mapping acquisition, RAT-independent positioning solutions (GNSS positioning, Bluetooth, WiFi, UWB, etc.), UE-based DL-TDOA positioning and UE-based DL-AOD defined by 5G NR position.

The location estimate can be in the form of location coordinates. The location coordinates include the following two options, which can be based on the location coordinates defined by the current 37.355 protocol:
Option 1: (x, y, z) in the GCS coordinate system, where Option 1 uses the Cartesian coordinate system;
Option 2: In the GCS coordinate system (northern and southern hemisphere indications, dimensions, accuracy), option 2 adopts the spherical coordinate system.

The accuracy indication parameter of the position coordinates can be the reliability level (reliability parameter), or the error range and quality indication of the reference device position. As an example, the adoption option 2 of the candidate reference device.

Specifically, the error range and quality indication of the location parameters of the candidate reference device further include the quality indication parameter of the positioning measurement value of the reference device, and the error range parameter of the location solution value of the reference device.

Option 2-1: Quality indication of the reference positioning measurement of the reference device, quality indication of the location solution of the reference device, including the following two fields:
Error value: the best estimate indicating the uncertainty of the location solution value;
Error resolution: Indicates the quantization step size of the error value.

Option 2-2: The error range of the reference device's positioning measurement or location solution value, for example: error value based on 1 sigma or 3 sigma criterion; variance value; location solution value at [95%] confidence level And/or the probability that the error of the positioning measurement value lies in a certain error interval, etc.

Step 222: The candidate reference device simultaneously reports the location parameter and the accuracy indication parameter corresponding to the location parameter to the LMF.

Step 223: The candidate reference device receives the uplink positioning assistance data (SRS-POS) notified by the LMF.

Step 224: The reference device sends uplink SRS-POS.

3. The serving base station of the non-reference device performs the following steps 231 to 234:
Step 231: The serving base station triggers or configures the reference device.

The serving base station receives the instruction signaling from the LMF and triggers or configures the reference device through broadcast signaling (SIB message) or RRC dedicated signaling. The serving base station sends broadcast messages or RRC signaling to all UEs in the coverage area, requesting all candidate reference devices (or UEs with the capability of serving as reference devices) to send their positioning reference parameters to the LMF.
Step 232: Allocate the positioning reference signal (uplink SRS-POS) based on the target UE and the reference device, and report the positioning assistance data information to the LMF;
Step 233: receive the uplink SRS-POS sent by all UEs in the serving cell, and perform measurements to obtain the uplink positioning measurement value (for example: RTOA, or AOA);
Step 234: For uplink positioning or joint uplink and downlink positioning, the uplink measurement value is reported to the LMF.

As a third example, taking the candidate reference device as the first base station and the network-side device (first network-side device) as the second base station, and performing downlink positioning of the target UE as an example, LMF uses the first base station and the second base station. Perform the following processes respectively:

### 1. LMF performs the following steps 311 to 315:

Step 311: LMF triggers or configures the reference device through at least one of the following methods 1 to 3.

Method 1: LMF receives automatic reporting of candidate reference devices.

The reported content includes: the candidate reference device capability parameters (used to determine whether the candidate reference device has the capability to serve as a reference device), the location estimate and the velocity estimate, and the accuracy indication parameters of the location estimate and the velocity estimate (the accuracy indication parameters include Reliability level, error margin and quality indication, etc.). The above reported amount is used by LMF to select a reference device based on certain criteria when there are multiple candidate reference devices.

In Method 2, the LMF sends indication signaling to the second base station, which is triggered by the second base station through broadcast signaling (SIB message) or RRC dedicated signaling. The serving gNB sends first indication information to all first base stations in the coverage area, requesting all (or pre-configured) candidate reference devices (including first base stations with the capability of serving as reference devices), according to the requirements of the first indication information and Configure, receive the DL PRS and send the measured values obtained by the measurement to the LMF together with their location information. It is also possible that a broadcast message or RRC signaling requests a pre-configured reference device to send UL SRS-POS. Among them, a group of devices can be pre-configured as reference devices.

Method 3: LMF is triggered through a dedicated preset signaling message.

The LMF can send a dedicated message (or extend the existing LPP signaling message: provide a first base station capability request message, provide a positioning assistance data message, or define a new LPP signaling message) to one or more candidate reference devices. It is assumed that the signaling message is used to indicate whether a certain device is selected as a reference device, and to request the reference device to report together with its position coordinate information and positioning measurement quantities. For example, the LMF triggers all capabilities within the coverage area of the second base station associated with the LMF. The first base station serving as a reference device first performs a base station -based positioning, allowing all candidate first base stations to report the location estimate value and velocity estimate value and uncertainty of the first base station.

Step 312: When there are multiple candidate reference devices, the LMF selects one or more reference devices based on any one or a combination of the following criteria.
Criterion 1: Selection based on the quality indication of the location estimate reported by the first base station from high to low (or uncertainty from small to large);
Criterion 2: Based on the velocity estimate reported by the first base station, the first base station is selected in ascending order, and the first base station whose speed is 0 (that is, the first base station is stationary) is given priority;
Criterion 3: Based on the first base station capability level reported by the first base station, the first base station is selected in descending order, and the first base station with the strongest first base station capability is given priority as the reference device;
Criterion 4: Select from high to low the accuracy and reliability levels corresponding to different base station-based positioning methods reported by the first base station.

Step 313: The LMF notifies the candidate reference device of the downlink positioning assistance data obtained from the serving second base station and the adjacent second base station.

Among them, the message sent by the LMF to the reference device may include configuration information for measurement reporting, including: the content of the positioning measurement value (downlink RSTD, and the first base station transceiver time difference, etc.), reporting timing and reporting method (periodic or non-periodic reporting).

Step 314: The LMF receives the positioning measurement value (RSTD) reported by the reference device and the non-reference device.

Step 315: The LMF performs position calculation based on the downlink positioning measurement value (RSTD) obtained in step 314, as well as the position of the reference device and the second base station/TRP position obtained in advance.

For example, based on real-time double differential or one-time single differential processing, high-precision target first base station location information can be obtained.

2. The candidate reference device (first base station) performs the following steps 321 to 324:
Step 321: The location parameter (location estimate) of the candidate reference device, and the accuracy indication parameter corresponding to the location estimate.

When the candidate reference device is a base station whose ideal position is known in advance, there is no need to perform separate positioning, and the location estimate value and the accuracy indication parameter corresponding to the first location estimate value are directly obtained.

Step 322: Based on the current NRPPa signaling, the candidate reference device simultaneously reports the location parameter and the accuracy indication parameter corresponding to the location parameter to the LMF.

Step 323: For downlink positioning (or uplink and downlink positioning), the candidate reference device receives the downlink positioning assistance data (time-frequency resource configuration information of the PRS) notified by the LMF;
assistance data (SRS-POS time-frequency resource configuration information) notified by the serving base station .

Step 324: For downlink positioning (or uplink and downlink positioning), the candidate reference device receives and measures the downlink PRS based on the configuration information of the downlink PRS contained in the downlink positioning assistance data, obtains the downlink positioning measurement volume, and reports it to the LMF;

For uplink positioning (or uplink and downlink positioning), the reference device sends uplink SRS-POS.

### 3. The second base station that is not a reference device performs the following steps 331 to 332:

Step 331: Allocate the resource configuration parameters of the downlink positioning reference signal PRS as positioning assistance data based on the target first base station and the candidate reference device, and report the positioning assistance data information to the LMF;

Step 332: Send downlink PRS to all UEs in the serving cell.

In the above example of the embodiment of the present disclosure, the candidate reference device determines the positioning reference parameters, sends the positioning reference parameters to the Location Management Function (LMF) network element, the LMF obtains the positioning reference parameters of the candidate reference device, and determines based on the positioning reference parameters. The target reference device among the candidate reference devices; positioning reference parameters can be automatically sent by the candidate reference device, or obtained through the first indication information and/or the second indication information; the embodiment of the present disclosure provides a configuration or selection target reference device, and improve the configuration accuracy or selection accuracy of the target reference device by configuring positioning reference parameters or selecting target reference device, thereby improving the positioning accuracy of UE positioning in the 5G NR system.

The method provided by the embodiment of the present disclosure has been introduced above. The device provided by the embodiment of the present disclosure will be introduced below with reference to the drawings.

Referring to Fig. 4, an embodiment of the present disclosure also provides a reference device determination equipment, which is applied to the Location Management Function (LMF) network element. The device includes:
a parameter obtaining module 401, configured to obtain positioning reference parameters of candidate reference devices;
a device determination module 402, configured to determine a target reference device from the candidate reference devices according to the positioning reference parameters;
where the positioning reference parameters are obtained through at least one of the following:
   receiving the positioning reference parameters sent by the candidate reference devices;
   instructing a first network-side device to send first indication information to the candidate reference devices, where the first indication information instructs the candidate reference devices to send the positioning reference parameters to the LMF; and
   sending second indication information to the candidate reference devices through a preset signaling message, where the second indication information instructs the candidate reference devices to send the positioning reference parameters to the LMF.

Optionally, the positioning reference parameters include at least one of the following:
location parameters of the candidate reference devices and accuracy indication parameters of the location parameters.

Optionally, the location parameters include at least one of the following:
location estimate values, velocity estimate values, device capability parameters, and positioning method parameters of the candidate reference devices.

Optionally, the accuracy indication parameters include at least one of the following:
quality indication parameters of the location estimate values, error range parameters of the location estimate values, uncertainty parameters of the location estimate values, and reliability parameters of the positioning method parameters.

Optionally, when the accuracy indication parameters include the error range parameters of the location estimate values, the error range parameters include a first error range parameter and/or a second error range parameter;
where the first error range parameter includes a first error of a location solution value of the candidate reference devices; the first error includes an error value and/or an error resolution;
the second error range parameter includes a second error of the candidate reference devices, where the second error is an error of the location solution value and/or a positioning measurement value.

Optionally, the device determination module 402 includes:
a first determination submodule, configured to, when the candidate reference devices include one reference device, determine whether the candidate reference device is the target reference device according to the positioning reference parameters and preset parameter requirements; where the preset parameter requirements include a requirement for at least one of the positioning reference parameters;
a second determination submodule, configured to, when the candidate reference devices include at least two reference devices, determine the target reference device from the candidate reference devices according to a preset selection method.

Optionally, second determination submodule is further configured to perform:
determining the target reference device from the candidate reference devices according to an ascending order of numerical values of the quality indication parameters of the location estimate values;
determining the target reference device from the candidate reference devices according to an ascending order of numerical values of the uncertainty parameters of the location estimate values;
determining the target reference device from the candidate reference devices according to an ascending order of the velocity estimate values;
determining the target reference device from the candidate reference devices according to an ascending order of numerical values of the device capability parameters of the candidate reference devices;
determining the target reference device from the candidate reference devices according to an ascending order of numerical values of the reliability parameters of the positioning method parameters; or
determining the target reference device from the candidate reference devices based on at least two parameters among the positioning reference parameters.

Optionally, the equipment further includes:
a first positioning module, configured to send positioning assistance data to the target reference device or adjacent network-side devices of the target reference device;
receive positioning measurement values;
position a target terminal based on the positioning measurement values.

According to the embodiments of the present disclosure, the parameter obtaining module 401 obtains the positioning reference parameters of the candidate reference devices; the device determination module 402 determines the target reference device among the candidate reference devices according to the positioning reference parameters; the positioning reference parameters can be automatically sent by the candidate reference devices, or obtained through the first indication information and/or the second indication information; the embodiment of the present disclosure provides a way to configure or select a reference device, and configure or select the reference device through positioning reference parameters to improve the configuration accuracy or selection accuracy of the target reference device, thereby improving the positioning accuracy of UE positioning in the 5G NR system. Moreover, in the subsequent positioning process, the position information of the target reference device can be referred to, which can further improve the positioning accuracy of positioning the UE.

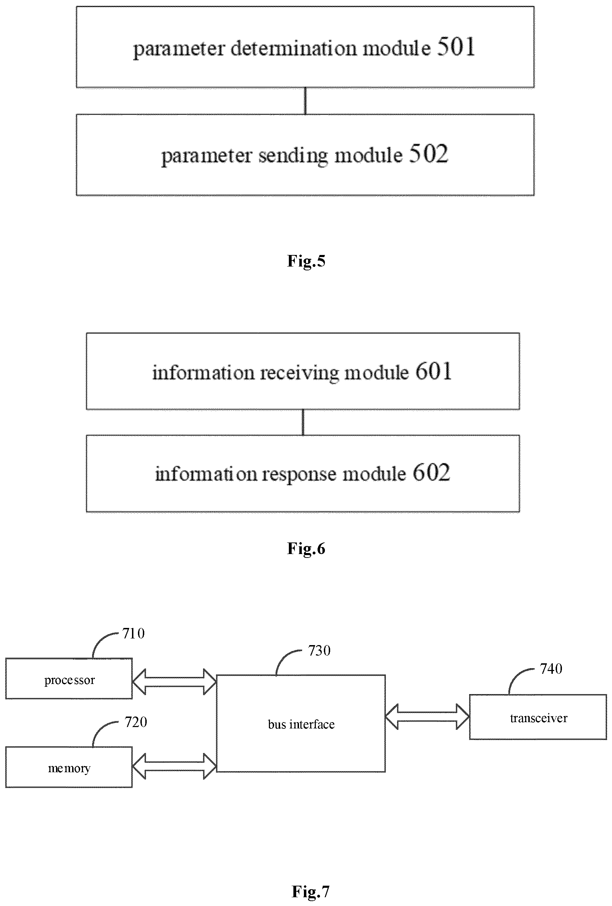

Referring to Fig. 5, an embodiment of the present disclosure also provides a parameter processing equipment, which is applied to candidate reference devices. The device includes:
a parameter determination module 501, configured to determine a positioning reference parameter;
a parameter sending module 502, configured to send the positioning reference parameter to a Location Management Function (LMF) network element;
where the positioning reference parameter is sent through at least one of the following:
   sent by the candidate reference device autonomously;
   sent when receiving first indication information sent by a first network-side device, where the first indication information is sent by the first network-side device which is instructed by the LMF; and
   sent when a preset signaling message sent by the LMF is received.

Optionally, the positioning reference parameter includes at least one of the following:
a location parameter of the candidate reference device and an accuracy indication parameter of the location parameter.

Optionally, the location parameter includes at least one of the following:
a location estimate value, a velocity estimate value, a device capability parameter, and a positioning method parameter of the candidate reference device.

Optionally, the accuracy indication parameter includes at least one of the following:
a quality indication parameter of the location estimate value, an error range parameter of the location estimate value, an uncertainty parameter of the location estimate value, and a reliability parameter of the positioning method parameter.

Optionally, when the accuracy indication parameter includes the error range parameter of the location estimate, the error range parameter includes a first error range parameter and/or a second error range parameter;
where the first error range parameter includes a first error of a location solution value of the candidate reference device; the first error includes an error value and/or an error resolution;
the second error range parameter includes a second error of the candidate reference device, where the second error is an error of the location solution value and/or a positioning measurement value.

Optionally, when the location parameter includes the location estimate value, the parameter sending module 502 includes:
a first obtaining submodule, configured to, when the candidate reference device includes a network-side device, obtain a location estimate value of the network-side device and/or a quality indication parameter of the location estimate value;
a second obtaining submodule, configured to, when the candidate reference device includes a terminal device, position the terminal device to obtain a location estimate value of the terminal device, and obtaining a quality indication parameter of the location estimate value.

Optionally, the second obtaining submodule is configured to perform:
positioning the terminal device according to a preset positioning method to obtain the location estimate value of the terminal device;
the preset positioning method includes at least one of the following:
a laser mapping method, a RAT-independent UE-based positioning, and a RAT-dependent UE-based positioning.

Optionally, the second obtaining submodule is configured to perform:
determining the quality indication parameter of the location estimate value based on the preset positioning method and/or a location attribute of the terminal device's location estimate value; where the location attribute includes: the location estimate value indicates a preset position and/or a location of the transmission-reception point of a target network-side device.

Optionally, the parameter sending module 502 includes:
a first sending submodule, configured to, when the candidate reference device includes a network-side device, send the positioning reference parameter to the LMF network element based on a New Radio (NR) positioning protocol A signaling;
a second sending submodule, configured to, when the candidate reference device includes a terminal device, send the positioning reference parameter to the LMF network element based on a Long Term Evolution (LTE) positioning protocol signaling.

Optionally, the equipment further includes:
a data receiving module, configured to, when the candidate reference device is the target reference device, receive positioning assistance data sent by the LMF;
a data sending module, configured to measure a positioning measurement value according to the positioning assistance data, and sending the positioning measurement value to the LMF.

In the embodiment of the present disclosure, the parameter determination module 501 determines the positioning reference parameters; the parameter sending module 502 sends the positioning reference parameters to the Location Management Function (LMF) network element; the positioning reference parameters can be automatically sent by the candidate reference device, or through the first indication information and /or second indication information acquisition; the embodiment of the present disclosure provides a way to configure or select a reference device, and LMF configures or selects the reference device by positioning reference parameters to improve the configuration accuracy or selection accuracy of the target reference device, thereby improving positioning accuracy of UE positioning in the 5G NR system.

Referring to Fig. 6, an embodiment of the present disclosure also provides a reference device determination equipment, which is applied to network-side device. The device includes:
an information receiving module 601, is configured to receive third indication information sent by a Location Management Function (LMF) network element;
an information response module 602, configured to, in response to the third indication information, send first indication information to candidate reference devices, where the first indication information instructs the candidate reference devices to send the positioning reference parameters to the LMF; the positioning reference parameters are used by the LMF to determine a target reference device from the candidate reference devices.

In the present embodiment, the information receiving module 601 receives the third indication information sent by the Location Management Function (LMF) network element, and the information response module 602 responds to the third indication information and sends the first indication information to the candidate reference device. An instruction information instructs the candidate reference device to send the positioning reference parameter to the LMF, so that the LMF determines the target reference device among the candidate reference devices according to the positioning reference parameter; an embodiment of the present disclosure provides a The method of configuring or selecting reference device, and configuring or selecting reference device through positioning reference parameters, improves the configuration accuracy or selection accuracy of the target reference device, thereby improving the positioning accuracy of UE positioning in the 5G NR system.

It should be noted that the division of modules (units) in the embodiments of the present disclosure is schematic and is only a logical function division. In actual implementation, there may be other division methods. In addition, each functional module in each embodiment of the present disclosure can be integrated into one processing module, each module can exist physically alone, or two or more modules can be integrated into one module. The above integrated modules can be implemented in the form of hardware or software function modules.

If the integrated module is implemented in the form of a software function module and sold or used as an independent product, it can be stored in a processor-readable storage medium. Based on this understanding, the technical solution of the present disclosure is essentially or contributes to the existing technology, or all or part of the technical solution can be embodied in the form of a software product, and the computer software product is stored in a storage medium , including several instructions to cause a computer device (which can be a personal computer, a server, or a network-side device, etc.) or a processor to execute all or part of the steps of the methods described in various embodiments of the present disclosure. The aforementioned storage media include: U disk, mobile hard disk, Read-Only Memory (ROM), Random Access Memory (RAM), magnetic disk or optical disk and other media that can store program code..

It should be noted here that the above-mentioned device provided by the embodiment of the present disclosure can implement all the method steps implemented by the above-mentioned method embodiment, and can achieve the same technical effect. The same as the method embodiment in this embodiment will no longer be used. The parts and beneficial effects will be described in detail.

As shown in Fig. 7, the embodiment of the present disclosure also provides a network-side device. The network-side device includes a Location Management Function (LMF) network element, and also includes a memory 720, a transceiver 740, and a processor 710;
where the memory 720 is configured to store a computer program; a transceiver 740 is configured to send and receive data under a control of the processor; the processor 710 is configured to read the computer program in the memory and perform:
obtaining positioning reference parameters of candidate reference devices;
determining a target reference device from the candidate reference devices according to the positioning reference parameters;
where the positioning reference parameters are obtained through at least one of the following:
   receiving the positioning reference parameters sent by the candidate reference devices;
   instructing a first network-side device to send first indication information to the candidate reference devices, where the first indication information instructs the candidate reference devices to send the positioning reference parameters to the LMF; and
   sending second indication information to the candidate reference devices through a preset signaling message, where the second indication information instructs the candidate reference devices to send the positioning reference parameters to the LMF.

Optionally, the positioning reference parameters include at least one of the following:
location parameters of the candidate reference devices and accuracy indication parameters of the location parameters.

Optionally, the location parameters include at least one of the following:
location estimate values, velocity estimate values, device capability parameters, and positioning method parameters of the candidate reference devices.

Optionally, the accuracy indication parameters include at least one of the following:
quality indication parameters of the location estimate values, error range parameters of the location estimate values, uncertainty parameters of the location estimate values, and reliability parameters of the positioning method parameters.

Optionally, when the accuracy indication parameters include the error range parameters of the location estimate values, the error range parameters include a first error range parameter and/or a second error range parameter;
where the first error range parameter includes a first error of a location solution value of the candidate reference devices; the first error includes an error value and/or an error resolution;
the second error range parameter includes a second error of the candidate reference devices, where the second error is an error of the location solution value and/or a positioning measurement value.

Optionally, the determining the target reference device from the candidate reference devices according to the positioning reference parameters includes:
when the candidate reference devices include one reference device, determining whether the candidate reference device is the target reference device according to the positioning reference parameters and preset parameter requirements; where the preset parameter requirements include a requirement for at least one of the positioning reference parameters;
when the candidate reference devices include at least two reference devices, determining the target reference device from the candidate reference devices according to a preset selection method.

Optionally, the determining the target reference device from the candidate reference devices according to the preset selection method includes at least one of the following:
determining the target reference device from the candidate reference devices according to an ascending order of numerical values of the quality indication parameters of the location estimate values;
determining the target reference device from the candidate reference devices according to an ascending order of numerical values of the uncertainty parameters of the location estimate values;
determining the target reference device from the candidate reference devices according to an ascending order of the velocity estimate values;
determining the target reference device from the candidate reference devices according to an ascending order of numerical values of the device capability parameters of the candidate reference devices;
determining the target reference device from the candidate reference devices according to an ascending order of numerical values of the reliability parameters of the positioning method parameters; or
determining the target reference device from the candidate reference devices based on at least two parameters among the positioning reference parameters.

Optionally, subsequent to the determining the target reference device from the candidate reference devices, the method further includes:
sending positioning assistance data to the target reference device or adjacent network-side devices of the target reference device;
receiving positioning measurement values;
positioning a target terminal based on the positioning measurement values. In FIG. 7 , the bus architecture may include any number of interconnected buses and bridges, specifically one or more processors 710 represented by the processor 710 and various circuits of the memory 720 represented by the memory 720 are linked together. The bus architecture can also link together various other circuits such as peripherals, voltage regulators, and power management circuits, which are all well known in the art and therefore will not be described further herein. Bus interface 730 provides the interface. The transceiver 740 may be a plurality of elements, including a transmitter and a receiver, providing a unit for communicating with various other devices over transmission media, including wireless channels, wired channels, optical cables, and other transmission media. The processor 710 is responsible for managing the bus architecture and general processing, and the memory 720 can store data used by the processor 710 when performing operations.

The processor 710 may be a central processing unit (CPU), an application specific integrated circuit (Application Specific Integrated Circuit, ASIC), a field programmable gate array (Field-Programmable Gate Array, FPGA) or a complex programmable logic device (Complex Programmable Logic Device). , CPLD), the processor 710 can also adopt a multi-core architecture.

The processor 710 is configured to execute any of the methods provided by the embodiments of the present disclosure according to the obtained executable instructions by calling the computer program stored in the memory 720. The processor 710 and the memory 720 may also be physically separated.

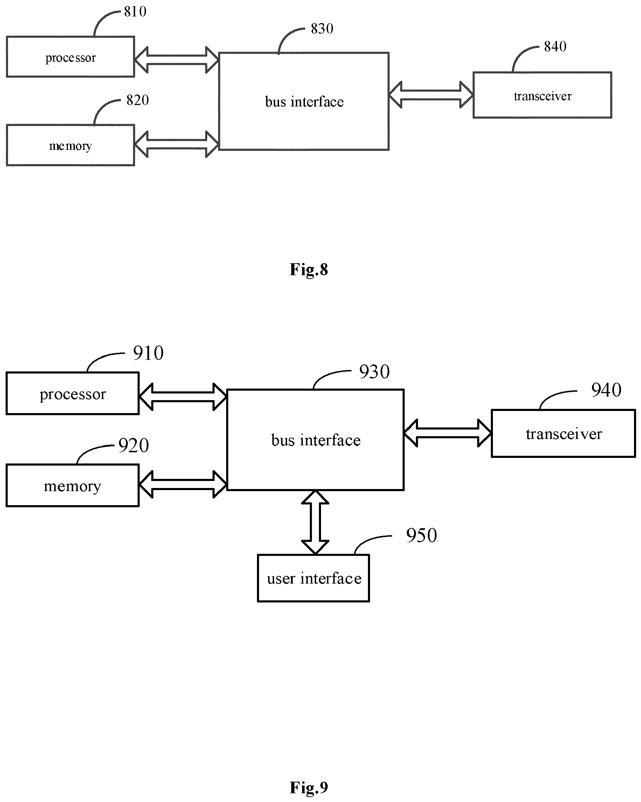

As shown in Fig. 8, an embodiment of the present disclosure also provides a terminal, including a memory 820, a transceiver 840, and a processor 810;
where the memory 820 is configured to store a computer program; the transceiver 840 is configured to send and receive data under a control of the processor; the processor 810 is configured to read the computer program in the memory and perform:
determining a positioning reference parameter;
sending the positioning reference parameter to a Location Management Function (LMF) network element;
where the positioning reference parameter is sent through at least one of the following:
   sent by the candidate reference device autonomously;
   sent when receiving first indication information sent by a first network-side device, where the first indication information is sent by the first network-side device which is instructed by the LMF; and
   sent when a preset signaling message sent by the LMF is received.

Optionally, the positioning reference parameter includes at least one of the following:
a location parameter of the candidate reference device and an accuracy indication parameter of the location parameter.

Optionally, the location parameter includes at least one of the following:
a location estimate value, a velocity estimate value, a device capability parameter, and a positioning method parameter of the candidate reference device.

Optionally, the accuracy indication parameter includes at least one of the following:
a quality indication parameter of the location estimate value, an error range parameter of the location estimate value, an uncertainty parameter of the location estimate value, and a reliability parameter of the positioning method parameter.

Optionally, when the accuracy indication parameter includes the error range parameter of the location estimate, the error range parameter includes a first error range parameter and/or a second error range parameter;
where the first error range parameter includes a first error of a location solution value of the candidate reference device; the first error includes an error value and/or an error resolution;
the second error range parameter includes a second error of the candidate reference device, where the second error is an error of the location solution value and/or a positioning measurement value.

Optionally, when the location parameter includes the location estimate value, the determining the positioning reference parameter includes:
when the candidate reference device includes a network-side device, obtaining a location estimate value of the network-side device and/or a quality indication parameter of the location estimate value;
when the candidate reference device includes a terminal device, positioning the terminal device to obtain a location estimate value of the terminal device, and obtaining a quality indication parameter of the location estimate value.

Optionally, the positioning the terminal device to obtain the location estimate value of the terminal device includes:
positioning the terminal device according to a preset positioning method to obtain the location estimate value of the terminal device;
the preset positioning method includes at least one of the following:
a laser mapping method, a RAT-independent UE-based positioning, and a RAT-dependent UE-based positioning.

Optionally, the obtaining the quality indication parameter of the location estimate value includes:
determining the quality indication parameter of the location estimate value based on the preset positioning method and/or a location attribute of the terminal device's location estimate value; where the location attribute includes: the location estimate value indicates a preset position and/or a location of the transmission-reception point of a target network-side device.

Optionally, the sending the positioning reference parameter to the LMF network element includes:
when the candidate reference device includes a network-side device, sending the positioning reference parameter to the LMF network element based on a New Radio (NR) positioning protocol A signaling;
when the candidate reference device includes a terminal device, sending the positioning reference parameter to the LMF network element based on a Long Term Evolution (LTE) positioning protocol signaling.

Optionally, subsequent to the sending the positioning reference parameter to the LMF network element, the method includes:
when the candidate reference device is the target reference device, receiving positioning assistance data sent by the LMF;
measuring a positioning measurement value according to the positioning assistance data, and sending the positioning measurement value to the LMF.

In FIG. 8 , the bus architecture may include any number of interconnected buses and bridges, specifically one or more processors 810 represented by the processor 810 and various circuits of the memory 820 represented by the memory 820 are linked together. The bus architecture can also link together various other circuits such as peripherals, voltage regulators, and power management circuits, which are all well known in the art and therefore will not be described further herein. Bus interface 830 provides the interface. The transceiver 840 may be a plurality of elements, including a transmitter and a receiver, providing a unit for communicating with various other devices over transmission media, including wireless channels, wired channels, optical cables, and other transmission media. The processor 810 is responsible for managing the bus architecture and general processing, and the memory 820 can store data used by the processor 810 when performing operations. For different user equipment, the user interface 850 can also be an interface that can connect external and internal required equipment. The connected equipment includes but is not limited to a small keyboard, a display, a speaker, a microphone, a joystick, etc.

The processor 810 may be a central processing unit (CPU), an application specific integrated circuit (Application Specific Integrated Circuit, ASIC), a field programmable gate array (Field-Programmable Gate Array, FPGA) or a complex programmable logic device (Complex Programmable Logic Device). , CPLD), the processor 810 can also adopt a multi-core architecture.

The processor 810 is configured to execute any of the methods provided by the embodiments of the present disclosure according to the obtained executable instructions by calling the computer program stored in the memory 820 . The processor 810 and the memory 820 may also be physically separated.

As shown in Fig. 9, the embodiment of the present disclosure also provides a network-side device. The network includes a memory 920, a transceiver 940, and a processor 910;
where the memory 920, is configured to store a computer program; a transceiver 940 is configured to send and receive data under a control of the processor; the processor is configured to read the computer program in the memory and perform:
receiving third indication information sent by a Location Management Function (LMF) network element;
in response to the third indication information, sending first indication information to candidate reference devices, where the first indication information instructs the candidate reference devices to send the positioning reference parameters to the LMF; the positioning reference parameters are used by the LMF to determine a target reference device from the candidate reference devices.

In FIG. 9, the bus architecture may include any number of interconnected buses and bridges, specifically one or more processors 910 represented by the processor 910 and various circuits of the memory 920 represented by the memory 920 are linked together. The bus architecture can also link together various other circuits such as peripherals, voltage regulators, and power management circuits, which are all well known in the art and therefore will not be described further herein. Bus interface 930 provides the interface. The transceiver 940 may be a plurality of elements, including a transmitter and a receiver, providing a unit for communicating with various other devices over transmission media, including wireless channels, wired channels, optical cables, and other transmission media. The processor 910 is responsible for managing the bus architecture and general processing, and the memory 920 can store data used by the processor 910 when performing operations.

The processor 910 may be a central processing unit (CPU), an application specific integrated circuit (Application Specific Integrated Circuit, ASIC), a field programmable gate array (Field-Programmable Gate Array, FPGA) or a complex programmable logic device (Complex Programmable Logic Device). , CPLD), the processor 910 may also adopt a multi-core architecture.

The processor 910 is configured to execute any of the methods provided by the embodiments of the present disclosure according to the obtained executable instructions by calling the computer program stored in the memory 920. The processor 910 and the memory 920 may also be physically separated.

It should be noted here that the above-mentioned devices provided by the embodiments of the present disclosure can implement all the method steps implemented by the respective corresponding above-mentioned method embodiments, and can achieve the same technical effects. No further description of the methods in this embodiment will be given here. The same parts and beneficial effects of the embodiments will be described in detail.

Embodiments of the present disclosure also provide a processor-readable storage medium that stores a computer program, and the computer program is used to cause the processor to execute the foregoing method.

The processor-readable storage medium may be any available media or data storage device that the processor can access, including but not limited to magnetic storage (such as floppy disks, hard disks, tapes, magneto-optical disks (MO), etc.), optical storage (such as CD, DVD, BD, HVD, etc.), and semiconductor memory (such as ROM, EPROM, EEPROM, non-volatile memory (NAND FLASH), solid state drive (SSD)), etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) having computer-usable program code embodied therein.

The present disclosure is described with reference to flowchart illustrations and/or block diagrams of methods, apparatus (systems), and computer program products according to embodiments of the disclosure. It will be understood that each process and/or block in the flowchart illustrations and/or block diagrams, and combinations of processes and/or blocks in the flowchart illustrations and/or block diagrams, can be implemented by computer-executable instructions. These computer-executable instructions may be provided to a processor of a general purpose computer, special purpose computer, embedded processor, or other programmable data processing device to produce a machine such that the instructions are executed by the processor of the computer or other programmable data processing device. Means are generated for implementing the functions specified in the process or processes of the flowchart diagram and/or the block or blocks of the block diagram.

These processor-executable instructions may also be stored in a processor-readable memory that causes a computer or other programmable data processing apparatus to operate in a particular manner, such that the generation of instructions stored in the processor-readable memory includes the manufacture of the instruction means product, the instruction device implements the function specified in one process or multiple processes in the flow chart and/or one block or multiple blocks in the block diagram.

These processor-executable instructions may also be loaded onto a computer or other programmable data processing device, causing a series of operational steps to be performed on the computer or other programmable device to produce computer-implemented processing, thereby causing the computer or other programmable device to The instructions that are executed provide steps for implementing the functions specified in a process or processes of the flowchart diagrams and/or a block or blocks of the block diagrams.

Obviously, those skilled in the art can make various changes and modifications to the present disclosure without departing from the spirit and scope of the disclosure. In this way, if these modifications and variations of the present disclosure fall within the scope of the claims of the present disclosure and equivalent technologies, the present disclosure is also intended to include these modifications and variations.

## Claims

1. A reference device determination method, applied to a Location Management Function (LMF) network element, comprising:
obtaining positioning reference parameters of candidate reference devices;
determining a target reference device from the candidate reference devices according to the positioning reference parameters;
wherein the positioning reference parameters are obtained through at least one of the following:
receiving the positioning reference parameters sent by the candidate reference devices;
instructing a first network-side device to send first indication information to the candidate reference devices, wherein the first indication information instructs the candidate reference devices to send the positioning reference parameters to the LMF; and
sending second indication information to the candidate reference devices through a preset signaling message, wherein the second indication information instructs the candidate reference devices to send the positioning reference parameters to the LMF.

2. The reference device determination method according to claim 1, wherein the positioning reference parameters comprise at least one of the following:
location parameters of the candidate reference devices and accuracy indication parameters of the location parameters.

3. The reference device determination method according to claim 2, wherein the location parameters comprise at least one of the following:
location estimate values, velocity estimate values, device capability parameters, and positioning method parameters of the candidate reference devices.

4. The reference device determination method according to claim 3, wherein the accuracy indication parameters comprise at least one of the following:
quality indication parameters of the location estimate values, error range parameters of the location estimate values, uncertainty parameters of the location estimate values, and reliability parameters of the positioning method parameters.

5. The reference device determination method according to claim 4, wherein when the accuracy indication parameters comprise the error range parameters of the location estimate values, the error range parameters comprise a first error range parameter and/or a second error range parameter;
wherein the first error range parameter comprises a first error of a location solution value of the candidate reference devices; the first error comprises an error value and/or an error resolution;
the second error range parameter comprises a second error of the candidate reference devices, wherein the second error is an error of the location solution value and/or a positioning measurement value.

6. The reference device determination method according to claim 4, wherein the determining the target reference device from the candidate reference devices according to the positioning reference parameters comprises:
when the candidate reference devices comprise one reference device, determining whether the candidate reference device is the target reference device according to the positioning reference parameters and preset parameter requirements; wherein the preset parameter requirements comprise a requirement for at least one of the positioning reference parameters;
when the candidate reference devices comprise at least two reference devices, determining the target reference device from the candidate reference devices according to a preset selection method.

7. The reference device determination method according to claim 6, wherein the determining the target reference device from the candidate reference devices according to the preset selection method comprises at least one of the following:
determining the target reference device from the candidate reference devices according to an ascending order of numerical values of the quality indication parameters of the location estimate values;
determining the target reference device from the candidate reference devices according to an ascending order of numerical values of the uncertainty parameters of the location estimate values;
determining the target reference device from the candidate reference devices according to an ascending order of the velocity estimate values;
determining the target reference device from the candidate reference devices according to an ascending order of numerical values of the device capability parameters of the candidate reference devices;
determining the target reference device from the candidate reference devices according to an ascending order of numerical values of the reliability parameters of the positioning method parameters; and
determining the target reference device from the candidate reference devices based on at least two parameters among the positioning reference parameters.

8. The reference device determination method according to any one of claims 1 to 7, wherein subsequent to the determining the target reference device from the candidate reference devices, the method further comprises:
sending positioning assistance data to the target reference device or adjacent network-side devices of the target reference device;
receiving positioning measurement values;
positioning a target terminal based on the positioning measurement values.

9. A parameter processing method, applied to a candidate reference device, comprising:
determining a positioning reference parameter;
sending the positioning reference parameter to a Location Management Function (LMF) network element;
wherein the positioning reference parameter is sent through at least one of the following:
sent by the candidate reference device autonomously;
sent when receiving first indication information sent by a first network-side device, wherein the first indication information is sent by the first network-side device which is instructed by the LMF; and
sent when a preset signaling message sent by the LMF is received.

10. The parameter processing method according to claim 9, wherein the positioning reference parameter comprises at least one of the following:
a location parameter of the candidate reference device and an accuracy indication parameter of the location parameter.

11. The parameter processing method according to claim 10, wherein the location parameter comprises at least one of the following:
a location estimate value, a velocity estimate value, a device capability parameter, and a positioning method parameter of the candidate reference device.

12. The parameter processing method according to claim 11, wherein the accuracy indication parameter comprises at least one of the following:
a quality indication parameter of the location estimate value, an error range parameter of the location estimate value, an uncertainty parameter of the location estimate value, and a reliability parameter of the positioning method parameter.

13. The parameter processing method according to claim 12, wherein when the accuracy indication parameter comprises the error range parameter of the location estimate, the error range parameter comprises a first error range parameter and/or a second error range parameter;
wherein the first error range parameter comprises a first error of a location solution value of the candidate reference device; the first error comprises an error value and/or an error resolution;
the second error range parameter comprises a second error of the candidate reference device, wherein the second error is an error of the location solution value and/or a positioning measurement value.

14. The parameter processing method according to claim 12, wherein when the location parameter comprises the location estimate value, the determining the positioning reference parameter comprises:
when the candidate reference device comprises a network-side device, obtaining a location estimate value of the network-side device and/or a quality indication parameter of the location estimate value;
when the candidate reference device comprises a terminal device, positioning the terminal device to obtain a location estimate value of the terminal device, and obtaining a quality indication parameter of the location estimate value.

15. The parameter processing method according to claim 11, wherein the positioning the terminal device to obtain the location estimate value of the terminal device comprises:
positioning the terminal device according to a preset positioning method to obtain the location estimate value of the terminal device;
the preset positioning method comprises at least one of the following:
a laser mapping method, a RAT-independent UE-based positioning, and a RAT-dependent UE-based positioning.

16. The parameter processing method according to claim 15, wherein the obtaining the quality indication parameter of the location estimate value comprises:
determining the quality indication parameter of the location estimate value based on the preset positioning method and/or a location attribute of the terminal device's location estimate value; wherein the location attribute comprises: the location estimate value indicates a preset position and/or a location of a transmission-reception point of a target network-side device.

17. The parameter processing method according to claim 9, wherein the sending the positioning reference parameter to the LMF network element comprises:
when the candidate reference device comprises a network-side device, sending the positioning reference parameter to the LMF network element based on a New Radio (NR) positioning protocol A signaling;
when the candidate reference device comprises a terminal device, sending the positioning reference parameter to the LMF network element based on a Long Term Evolution (LTE) positioning protocol signaling.

18. The parameter processing method according to claim 9, wherein subsequent to the sending the positioning reference parameter to the LMF network element, the method comprises:
when the candidate reference device is the target reference device, receiving positioning assistance data sent by the LMF;
measuring a positioning measurement value according to the positioning assistance data, and sending the positioning measurement value to the LMF.

19. A reference device determination method, applied to a network-side device, comprising:
receiving third indication information sent by a Location Management Function (LMF) network element;
in response to the third indication information, sending first indication information to candidate reference devices, wherein the first indication information instructs the candidate reference devices to send the positioning reference parameters to the LMF; the positioning reference parameters are used by the LMF to determine a target reference device from the candidate reference devices.

20. A network-side device, comprising a Location Management Function (LMF) network element and
a memory, a transceiver, a processor:
wherein the memory is configured to store a computer program; a transceiver is configured to send and receive data under a control of the processor; the processor is configured to read the computer program in the memory and perform:
obtaining positioning reference parameters of candidate reference devices;
determining a target reference device from the candidate reference devices according to the positioning reference parameters;
wherein the positioning reference parameters are obtained through at least one of the following:
receiving the positioning reference parameters sent by the candidate reference devices;
instructing a first network-side device to send first indication information to the candidate reference devices, wherein the first indication information instructs the candidate reference devices to send the positioning reference parameters to the LMF; and
sending second indication information to the candidate reference devices through a preset signaling message, wherein the second indication information instructs the candidate reference devices to send the positioning reference parameters to the LMF.

21. A terminal, comprising:
a memory, a transceiver, a processor:
wherein the memory is configured to store a computer program; a transceiver is configured to send and receive data under a control of the processor; the processor is configured to read the computer program in the memory and perform:
determining a positioning reference parameter;
sending the positioning reference parameter to a Location Management Function (LMF) network element;
wherein the positioning reference parameter is sent through at least one of the following:
sent by the candidate reference device autonomously;
sent when receiving first indication information sent by a first network-side device, wherein the first indication information is sent by the first network-side device which is instructed by the LMF; and
sent when a preset signaling message sent by the LMF is received.

22. A network-side device, comprising:
a memory, a transceiver, a processor:
wherein the memory is configured to store a computer program; a transceiver is configured to send and receive data under a control of the processor; the processor is configured to read the computer program in the memory and perform:
receiving third indication information sent by a Location Management Function (LMF) network element;
in response to the third indication information, sending first indication information to candidate reference devices, wherein the first indication information instructs the candidate reference devices to send the positioning reference parameters to the LMF; the positioning reference parameters are used by the LMF to determine a target reference device from the candidate reference devices.

23. A reference device determination equipment, applied to a Location Management Function (LMF) network element and comprising:
a parameter obtaining module, configured to obtain positioning reference parameters of candidate reference devices;
a device determination module, configured to determine a target reference device from the candidate reference devices according to the positioning reference parameters;
wherein the positioning reference parameters are obtained through at least one of the following:
receiving the positioning reference parameters sent by the candidate reference devices;
instructing a first network-side device to send first indication information to the candidate reference devices, wherein the first indication information instructs the candidate reference devices to send the positioning reference parameters to the LMF; and
sending second indication information to the candidate reference devices through a preset signaling message, wherein the second indication information instructs the candidate reference devices to send the positioning reference parameters to the LMF.

24. A parameter processing equipment, applied to a candidate reference device and comprising:
a parameter determination module, configured to determine a positioning reference parameter;
a parameter sending module, configured to send the positioning reference parameter to a Location Management Function (LMF) network element;
wherein the positioning reference parameter is sent through at least one of the following:
sent by the candidate reference device autonomously;
sent when receiving first indication information sent by a first network-side device, wherein the first indication information is sent by the first network-side device which is instructed by the LMF; and
sent when a preset signaling message sent by the LMF is received.

25. A reference device determination equipment, applied to a network-side device and comprising:
an information receiving module, is configured to receive third indication information sent by a Location Management Function (LMF) network element;
an information response module, configured to, in response to the third indication information, send first indication information to candidate reference devices, wherein the first indication information instructs the candidate reference devices to send the positioning reference parameters to the LMF; the positioning reference parameters are used by the LMF to determine a target reference device from the candidate reference devices.

26. A processor-readable storage medium, wherein a computer program is stored in the processor-readable storage medium, and the computer program is configured to cause the processor to perform the method according to any one of claims 1 to 19.
